# EUROPÄISCHE PATENTSCHRIFT

(11) **EP 2 664 865 B1**
(45) Veröffentlichungstag und Bekanntmachung des Hinweises auf die Patenterteilung: **11.12.2019**
(21) Anmeldenummer: 13002512.5
(22) Anmeldetag: 13.05.2013
(51) Int. Cl.: F24F 13/14, F24F 7/08, F24F 13/20, F24F 7/00, F24F 12/00, F24F 11/00, F24F 11/77, F24F 11/74

(54) **Lufttechnisches Gerät zur Be- und Entlüftung sowie Be- und Entlüftungsverfahren**
Ventilation device for exhausting and ventilating and exhausting and ventilation method
Appareil d'aération pour l'aération et la purge d'air et procédé d'aération et de purge d'air

(30) Priorität: 16.05.2012 DE 102012009721; 11.03.2013 DE 102013004647
(43) Veröffentlichungstag der Anmeldung: 20.11.2013
(73) Patentinhaber: LTG Aktiengesellschaft, 70435 Stuttgart (DE)
(72) Erfinder: Wagner, Ralf, 70771 Leinfelden-Echterdingen (DE); Eggers, Inga, 70569 Stuttgart (DE); Roth, Hans-Werner, 71752 Tamm (DE); Schneider, Wolfgang, 72127 Kusterdingen (DE); Kenner, Florian, 73728 Esslingen (DE)
(74) Vertreter: Clarenbach, Carl-Philipp

(56) Entgegenhaltungen:
- EP-A2- 1 600 705
- WO-A1-99/61845
- DE-A1- 3 542 510
- DE-U1-202010 008 657
- KR-B1- 100 748 136

## Beschreibung

Die Erfindung betrifft ein lufttechnisches Gerät zur Be- und Entlüftung von mindestens einem Raum eines Gebäudes oder dergleichen.

Aus dem Stand der Technik ist ein lufttechnisches Gerät bekannt, das einen Zuluftweg und einen Abluftweg aufweist, wobei Zuluftweg und Abluftweg mit einer Wärmerückgewinnungsvorrichtung strömungstechnisch verbunden sind und sich sowohl im Zuluftweg als auch im Abluftweg eine Luftfördereinrichtung befindet, um Außenluft über den Zuluftweg und die Wärmerückgewinnungsvorrichtung einem Raum eines Gebäudes oder dergleichen als Zuluft zuzuführen und um Raumluft des Raumes als Abluft über den Abluftweg und die Wärmerückgewinnungsvorrichtung nach außen als Fortluft abzuführen. Das bekannte lufttechnische Gerät ist konstruktiv aufwendig gestaltet, hat hohe Erstellungskosten und ein relativ großes Bauvolumen und führt zu relativ hohen Betriebskosten Das Patentdokument EP-A-1600705 offenbart ein lufttechnisches Gerät gemäß dem Oberbegriff von Anspruch 1.

Der Erfindung liegt daher die Aufgabe zugrunde, ein lufttechnisches Gerät zur Be- und Entlüftung zu schaffen, das ein geringes Bauvolumen hat, kostengünstig aufgebaut ist und nur geringe Betriebskosten mit sich bringt. Gleichwohl soll das Gerät vorzugsweise frische Luft zuführen und verbrauchte Luft abführen, um ein gutes Raumklima zu schaffen.

Diese Aufgabe wird erfindungsgemäß dadurch gelöst, dass das erfindungsgemäße lufttechnische Gerät zur Be- und Entlüftung von mindestens einem Raum eines Gebäudes oder dergleichen mit zwei Luftkanälen versehen ist, die jeweils eingangsseitig sowie ausgangsseitig je eine Kanalöffnung aufweisen und die jeweils zwischen den zugehörigen Kanalöffnungen durch nur eine nur eine einzige Luftförderrichtung aufweisende Luftfördereinrichtung strömungstechnisch miteinander verbunden sind, und mit einer Verschlusseinrichtung, die in einer ersten Betriebsart zur Ausbildung eines über die Luftfördereinrichtung führenden ersten Luftwegs die eine Kanalöffnung des einen, ersten Luftkanals mit der einen Kanalöffnung des anderen, zweiten Luftkanals strömungstechnisch verbindet, und die in einer zweiten Betriebsart zur Ausbildung eines über die Luftfördereinrichtung führenden zweiten Luftwegs die andere Kanalöffnung des ersten Luftkanals mit der anderen Kanalöffnung des zweiten Luftkanals strömungstechnisch verbindet, wobei die Verschlusseinrichtung mehrere Schließorgane aufweist, und wobei sich die Schließorgane an den in einer Ebene liegenden Kanalöffnungen befinden. Das erfindungsgemäße lufttechnische Gerät besitzt demzufolge nur eine einzige Luftfördereinrichtung, die nur eine einzige Luftförderrichtung aufweist und demzufolge sowohl konstruktiv einfach als auch hinsichtlich der Betriebsführung günstig gestaltet ist. Die im Stand der Technik erwähnten zwei Luftfördereinrichtungen sind nicht erforderlich und ferner ist es auch trotz der Zuführung von frischer Luft in den Raum und Abführung von verbrauchter Luft aus dem Raum nicht erforderlich, die erfindungsgemäße einzige Luftfördereinrichtung hinsichtlich ihrer Luftförderrichtung umzuschalten. Vorzugsweise kann die einzige Luftfördereinrichtung kontinuierlich, also ohne Betriebsunterbrechung, arbeiten. Die Verschlusseinrichtung übernimmt die Luftführung, indem sie durch entsprechendes Öffnen und Schließen der beiden Luftkanäle einen Zuluftweg schafft, sodass beispielsweise Frischluft (insbesondere Außenluft) in den Raum eintreten kann und anschließend Abluft über einen Abluftweg aus dem Raum beispielsweise nach außen abführt. Dieses Zuführen und Abführen erfolgt in jeweils einer Betriebsart, wobei in der ersten Betriebsart die Verschlusseinrichtung zur Ausbildung eines über die Luftfördereinrichtung führenden ersten Luftwegs die eine Kanalöffnung des einen, ersten Luftkanals mit der einen Kanalöffnung des anderen, zweiten Luftkanals strömungstechnisch verbindet. Bei der einen Kanalöffnung des ersten Luftkanals kann es sich beispielsweise um eine Außenluftöffnung handeln und bei der einen Kanalöffnung des zweiten Luftkanals um beispielsweise eine in den Raum führende Zuluftöffnung. Schaltet die Verschlusseinrichtung nach einer vorgegebenen Zeit von der ersten Betriebsart in die zweite Betriebsart um, so führt dies zur Ausbildung eines über die Luftfördereinrichtung führenden zweiten Luftwegs, wobei die andere Kanalöffnung des ersten Luftkanals mit der anderen Kanalöffnung des zweiten Luftkanals strömungstechnisch verbunden wird. Handelt es sich bei der anderen Kanalöffnung des ersten Luftkanals beispielsweise um eine aus dem Raum führende Abluftöffnung und bei der anderen Kanalöffnung des zweiten Luftkanals beispielsweise um eine nach außen führende Fortluftöffnung, so kann Raumluft nach außen abtransportiert werden. Die Anordnung ist dabei derart getroffen, dass bei der Luftzuführung und der Luftabführung die Luftfördereinrichtung ihre Luftförderrichtung nicht ändern muss, das heißt, sie fördert in der ersten Betriebsart die Zuluft und in der zweiten Betriebsart die Abluft jeweils in gleicher Richtung, sodass mit nur einer einzigen Luftfördereinrichtung und ohne einen Luftförderrichtungswechsel ein günstiger Aufbau und ein günstiger Betrieb durchgeführt werden kann. Ferner ist vorzugsweise vorgesehen, dass die Luftfördereinrichtung trotz des Umschaltens von der ersten Betriebsart in die zweite Betriebsart und dann wieder in die erste Betriebsart und so weiter unterbrechungsfrei arbeitet.

Nach einer Weiterbildung der Erfindung ist - wie bereits angedeutet - vorgesehen, dass die erste Betriebsart und die zweite Betriebsart im fortlaufenden Wechsel eingenommen werden. Dies führt dazu, dass das Gerät "atmet", also abwechselnd in den beiden Betriebsarten Luft zu- und Luft abführt, also "einatmet" und "ausatmet". Die Größe der Zeitintervalle für die erste und die zweite Betriebsart sind mittels einer Steuereinrichtung und/oder Regeleinrichtung vorbestimmbar und vorzugsweise auch während des Betriebs individuell mittels der Steuereinrichtung und/oder Regeleinrichtung veränderbar.

Eine Weiterbildung der Erfindung sieht vor, dass die Verschlusseinrichtung Schließorgane aufweist, die vorzugsweise von mindestens einer Luftklappe und/oder von mindestens einem Schieber gebildet sind. Um die verschiedenen Luftwege für die beiden Betriebsarten zu realisieren, erfolgt eine entsprechende Betätigung der Schließorgane der Verschlusseinrichtung. Vorzugsweise ist in der ersten Betriebsart mindestens ein Schließorgan geöffnet und mindestens ein weiteres Schließorgan geschlossen. Wird in die zweite Betriebsart umgeschaltet, so wird das erstgenannte Schließorgan geschlossen und das weitere Schließorgan geöffnet. Die Verschlusseinrichtung, insbesondere die Schließorgane, wird/werden mittels der Steuereinrichtung und/oder der Regeleinrichtung gesteuert beziehungsweise geregelt.

Nach einer Weiterbildung der Erfindung ist vorgesehen, dass die Luftfördereinrichtung eine kontinuierlich arbeitende Luftfördereinrichtung, insbesondere ein durchgehend laufender Ventilator, insbesondere Radialventilator, ist. Der kontinuierliche, also keinen Änderungen unterworfene Betrieb, führt zu relativ niedrigen Betriebskosten und schont die Luftfördereinrichtung, sodass diese verschleißarm arbeitet. Insbesondere kann die Drehzahl des Ventilators konstant sein, sich also gar nicht verändern, sodass sowohl in der ersten Betriebsart als auch in der zweiten Betriebsart und dann wieder in der ersten Betriebsart und so weiter stets dieselbe Drehzahl vorliegt, also auch beim Betriebsartwechsel der Ventilator mit unveränderter Drehzahl weiterläuft. Entsprechendes gilt für andere Luftfördereinrichtungen, die nicht als Ventilator ausgebildet sind. Bei den vorstehenden Ausführungen ist zu berücksichtigen, dass die Luftfördereinrichtung unterschiedlicher Belastung während des Betriebs unterliegen kann, woraus gewisse Drehzahlschwankungen resultieren können. Dies wird jedoch als kontinuierlich arbeitende Luftfördereinrichtung, insbesondere Ventilator mit konstanter Drehzahl, im obigen Sinne verstanden. Insbesondere kann vorgesehen sein, dass die Luftfördereinrichtung geregelt betrieben wird, und insofern einen konstanten Luftvolumenstrom fördert. Im Falle eines Ventilators als Luftfördereinrichtung wird insbesondere die Drehzahl des Ventilators mittels der Regeleinrichtung auf einen konstanten Wert geregelt. Insofern werden auch Lastschwankungen die Drehzahl des Ventilators - bis auf kurzfristige Regelabweichungen - nicht wesentlich verändern.

Die Luftkanäle sind bevorzugt als Doppelluftkanal ausgebildet, der eine gemeinsame Trennwand aufweist, die die beiden Luftkanäle voneinander trennt. Der Doppelluftkanal ist daher als Einheit einfach zu installieren und kostengünstig aufgebaut, da die gemeinsame Trennwand gegenüber zwei einzelnen Luftkanälen Material einspart.

Eine Weiterbildung der Erfindung sieht eine beide Luftkanäle strömungstechnisch verbindende Luftverbindung vor, in der sich die Luftfördereinrichtung befindet oder die von der Luftfördereinrichtung ausgebildet oder mit ausgebildet ist. Diese Luftverbindung mündet strömungstechnisch vorzugsweise zwischen den jeweiligen Kanalöffnungen jedes Luftkanals.

Es ist - nach einer Weiterbildung der Erfindung - vorteilhaft, wenn die Verschlusseinrichtung zur Erzeugung einer impulsartigen Luftführung entsprechend schnell schließend und/oder entsprechend schnell öffnend arbeitend ausgebildet ist. Hierdurch erfolgt die impulsartige Luftführung, mit der Folge, dass die in den Raum eintretende Luftströmung und/oder die aus dem Raum abgeführte Luftströmung impulsartig erfolgt und zu einer guten Luftdurchmischung führt.

Eine Weiterbildung der Erfindung sieht vor, dass die Verschlusseinrichtung mehrere Schließorgane aufweist, die sich in den Luftkanälen und/oder an den Kanalöffnungen befinden. "In den Luftkanälen" bedeutet, dass sie beabstandet zu den Kanalöffnungen des jeweiligen Luftkanals sowie in dem jeweiligen Luftkanal liegen, und "an den Kanalöffnungen" bedeutet, dass sie diesen Kanalöffnungen zugeordnet sind, dass die Schließorgane also die Kanalöffnungen öffnen beziehungsweise diese schließen.

Nach einer bevorzugten Ausführungsform der Erfindung ist der Luftverbindung die Verschlusseinrichtung zugeordnet. Demzufolge ermöglichen die Schließorgane der Verschlusseinrichtung einen Zugang zur Luftverbindung oder keinen Zugang zu dieser.

Es ist vorteilhaft, wenn die Luftverbindung eine Querverbindung zu den Luftkanälen, insbesondere zu dem Doppelluftkanal, ist.

Eine Weiterbildung der Erfindung sieht vor, dass jeder der Luftkanäle in zwei Kanalabschnitte strömungstechnisch unterteilt ist. Die Luft strömt von dem Kanalabschnitt eines der Luftkanäle in die Luftverbindung und von dort in einen Kanalabschnitt des anderen Luftkanals. Dies entspricht der ersten Betriebsart. In der zweiten Betriebsart strömt die Luft durch den anderen Kanalabschnitt des erstgenannten Luftkanals in die Luftverbindung und von dort in den anderen Kanalabschnitt des anderen Luftkanals. Die jeweils nicht beteiligten Kanalabschnitte sind in der entsprechenden Betriebsart nicht mit der Luftverbindung verbunden.

Es ist vorteilhaft, wenn jeder Kanalabschnitt mit der Luftverbindung über ein Schließorgan der Verschlusseinrichtung strömungstechnisch verbunden ist. Das jeweilige Schließorgan kann eine Offenstellung einnehmen oder eine Schließstellung, sodass eine strömungstechnische Verbindung vorliegt oder eine strömungstechnische Unterbrechung. Im Zuge dieser Anmeldung wird stets von einem Öffnen eines Schließorgans oder einem Schließen eines Schließorgans gesprochen. Damit ist ein vollständiges Öffnen beziehungsweise ein komplettes Verschließen gemeint. Nach einer Weiterbildung der Erfindung ist es jedoch auch möglich, dass mindestens ein Schließorgan eine bestimmte Zwischenstellung einnimmt, um nicht nur eine strömungstechnische Verbindung zu schaffen, sondern über die zwischenstellungsabhängige Größe des Durchströmungsquerschnitts eine Volumenstromsteuerung oder Volumenstromregelung vorzunehmen. Der Öffnungsgrad beziehungsweise Schließgrad des mindestens einen Schließorgans kann mittels einer geeigneten Steuer- und/oder Regeleinrichtung vorgegeben werden. Diese Vorgehensweise ist bei allen Ausführungsbeispielen der Erfindung möglich, also die Schließorgane können vollständig öffnen und gänzlich schließen oder in gewünschte Zwischenstellungen gebracht werden, je nach Betriebsmodus des lufttechnischen Geräts. Unter "vollständig offen" ist die maximal mögliche Offenstellung der Schließorgane zu verstehen.

Insbesondere ist vorgesehen, dass zumindest einige der Schließorgane jedes Luftkanals als gemeinsames Verschlussorgan ausgebildet sind. Dies bedeutet, dass mehrere Schließorgane eines Luftkanals, insbesondere zwei Schließorgane dieses Luftkanals, zur Reduzierung des Aufwands als gemeinsames Verschlussorgan ausgebildet werden. So ist es nicht erforderlich, beispielsweise zwei Schließorgane dem Luftkanal zuzuordnen, sondern ein gemeinsames Verschlussorgan, das in der Lage ist, die Funktion der beiden Schließorgane zu übernehmen. Dies kann dadurch erfolgen, dass das gemeinsame Verschlussorgan einen Strömungsweg öffnet und dabei einen anderen Strömungsweg verschließt und - beim Übergang in die andere Betriebsart - den erstgenannten Strömungsweg verschließt und dabei den zweitgenannten Strömungsweg öffnet.

Es ist vorteilhaft, wenn die Schließorgane als Winkel-Luftklappen, insbesondere mit einem 90°-Winkel, ausgebildet sind. Die Winkel-Luftklappen besitzen demzufolge zwei Klappenblätter, die winklig zueinander stehen, insbesondere einen 90°-Winkel zueinander aufweisen.

Ferner können vorzugsweise zwei axial versetzt zueinander liegende Winkel-Luftklappen vorgesehen sein, die sich drehfest auf einer gemeinsamen Klappenwelle befindet. Wird die Klappenwelle verdreht, so verschwenken beide Winkel-Luftklappen. Da eine gemeinsame Klappenwelle vorliegt, ist für dieses Verschwenken nur ein einziger Antrieb erforderlich.

Insbesondere ist vorgesehen, dass zwei Kanalöffnungen Einströmöffnungen und zwei Kanalöffnungen Ausströmöffnungen bilden, wobei jeweils eine Einströmöffnung einer Ausströmöffnung benachbart zugeordnet ist und jeweils zwischen der Einströmöffnung und der benachbarten Ausströmöffnung die Klappenwelle verläuft. Da die jeweils einander zugeordneten Öffnungen benachbart zueinander liegen und dazwischen die Klappenwelle verläuft, ist es möglich, durch eine einzige Verschwenkung die Einströmöffnung beispielsweise zu öffnen und die Ausströmöffnung zu verschließen. Wird die Klappe zurückgeschwenkt, so wird die Einströmöffnung geschlossen und die Ausströmöffnung geöffnet. Entsprechendes erfolgt jeweils gleichzeitig bei der anderen Einströmöffnung und bei der anderen Ausströmöffnung, d.h., die Einströmöffnung wird geschlossen und die Ausströmöffnung geöffnet und durch das Zurückschwenken wird die Einströmöffnung geöffnet und die Ausströmöffnung geschlossen.

Eine Weiterbildung der Erfindung sieht eine Antriebsvorrichtung für die Verschlusseinrichtung vor, das heißt, es ist - wie bereits vorstehend erwähnt - nur eine einzige Antriebsvorrichtung erforderlich, wenn insbesondere die vorstehend erwähnte vorteilhafte Winkelklappenanordnung realisiert wird. Alternativ können natürlich auch mehrere Antriebsvorrichtungen vorgesehen sein, die die einzelnen Schließorgane der Verschlusseinrichtung betätigen oder die auch mehrere Schließorgane betätigen.

Ferner ist es vorteilhaft, wenn der Doppelluftkanal, die Luftfördereinrichtung und die Verschlusseinrichtung einem Grundmodul angehören. Dieses Grundmodul, kann mit mindestens einem Erweiterungsmodul kombiniert werden, das heißt, dem Grundmodul ist mindestens das Erweiterungsgerät zuordenbar/zugeordnet, das strömungstechnisch an mindestens eine der Kanalöffnungen des Grundmoduls anschließbar/angeschlossen ist.

Als Erweiterungsmodul steht insbesondere mindestens eine der folgenden Varianten zur Verfügung: Wärmetauschermodul, Schalldämpfermodul, Wärmerückgewinnungsmodul, Luftfiltermodul, insbesondere Außenluftfiltermodul, und/oder Außenluftklappenmodul. Je nach gewünschtem Aufbau des lufttechnischen Geräts lassen sich dem Grundmodul ein oder mehrere Erweiterungsmodule zuordnen. Werden mehrere Erweiterungsmodule vorgesehen, so ist bevorzugt vorgesehen, dass dem Grundmodul ein Erweiterungsmodul zugeordnet ist und diesem Erweiterungsmodul das weitere Erweiterungsmodul zugeordnet wird und gegebenenfalls so weiter.

Es kann auch vorgesehen sein, dass mehrere Varianten der vorstehend erwähnten, zur Verfügung stehenden Möglichkeiten wie Wärmetauschermodul, Schalldämpfermodul, Wärmerückgewinnungsmodul, Luftfiltermodul, insbesondere Außenluftfiltermodul, und/oder Außenluftklappenmodul, in einem gemeinsamen Erweiterungsmodul zusammengefasst sind, sodass durch Zuordnung dieses Erweiterungsmodul zu dem Grundmodul mehrere Funktionsvarianten zur Verfügung stehen.

Nach einer Weiterbildung der Erfindung ist vorgesehen, dass die Luftfördereinrichtung einen konstanten Luftvolumenstrom fördert, wobei insbesondere vorgesehen ist, dass der durchgehend laufende Ventilator eine konstante Drehzahl aufweist. Die erwähnte "konstante Drehzahl" ist derart zu verstehen, dass - je nach Situation - nur eine nahezu konstante Drehzahl vorliegt, da zum Beispiel je nach Luftdruckunterschieden (zum Beispiel Winddruck oder Windsog) der konstant eingestellte Ventilator etwas höher oder etwas niedriger dreht. Wird anstelle einer Steuerung eine Drehzahlregelung eingesetzt, so lässt sich die Drehzahl des Ventilators - bis auf kurzfristige Regelabweichungen - recht konstant halten.

Eine Weiterbildung der Erfindung sieht vor, dass die Verschlusseinrichtung von einer Steuer- und/oder Regeleinrichtung gesteuert und/oder geregelt wird. Mithin werden die Schließorgane, also insbesondere die Luftklappen und/oder Schieber, mittels der Steuer- und/oder Regeleinrichtung gesteuert und/oder geregelt, sodass sie eine entsprechende Zeitspanne geschlossen oder geöffnet sind. Nach einer besonderen Ausführungsform ist bevorzugt vorgesehen, dass nur die geschlossene Stellung und die maximal geöffnete Stellung der Luftklappen angefahren wird, also keine Zwischenstellungen. Nach einer alternativen Ausführungsform sind jedoch auch Zwischenstellungen möglich.

Nach einer bevorzugten Ausführungsform der Erfindung ist vorgesehen, dass die Verschlusseinrichtung von der Steuer- und/oder Regeleinrichtung zeitgesteuert und/oder zeitgeregelt wird, insbesondere die Offenzeit und die Geschlossenzeit der Schließorgane der Verschlusseinrichtung mittels der Steuer- und/oder Regeleinrichtung gesteuert und/oder geregelt werden, vorzugsweise derart, dass in der ersten und in der zweiten Betriebsart jeweils gleichgroße Luftvolumen gefördert werden. Nach einer besonders bevorzugten Ausführungsform der Erfindung ist die hier angesprochene Zeitsteuerung beziehungsweise Zeitregelung der Verschlusseinrichtung die einzige Variable bei der Betriebsführung. Die Luftklappen werden zügig geöffnet beziehungsweise geschlossen, sodass die Zeiten zum Öffnen beziehungsweise zum Schließen der Luftklappen gegenüber den Zeiten, in denen die Luftklappen maximal geöffnet beziehungsweise ganz geschlossen sind, kaum in Erscheinung treten und daher bei der Betriebsführung nur eine untergeordnete Rolle spielen, insbesondere außer Betracht bleiben. Von besonderer Bedeutung ist - wie vorstehend erwähnt, dass in der ersten und in der zweiten Betriebsart jeweils gleichgroße Luftvolumen gefördert werden. Dies hat zur Folge, dass in der ersten Betriebsart, also beim "Ausatmen" Raumluft Ra aus dem Raum nach außen gefördert wird und dass in der zweiten Betriebsart, also beim "Einatmen" Außenluft Au von außen nach innen, also in den Raum hineingefördert wird. Damit ist das angesaugte Frisch- beziehungsweise Außenluftvolumen ebenso groß wie das angesaugte Raumluftvolumen, das abtransportiert wird.

Insbesondere sieht die Erfindung vor, dass zur Bestimmung der Offenzeit und der Geschlossenzeit der Schließorgane mindestens ein Sensor vorhanden ist. Der mindestens eine Sensor erfasst eine Größe beziehungsweise ein Parameter, um eine Aussage über das von der Luftfördereinrichtung geförderte Luftvolumen treffen zu können, sodass mittels der Zeitsteuerung und/oder Zeitregelung die Verschlusseinrichtung, insbesondere die Luftklappen, derart gesteuert und/oder geregelt werden, dass gleichgroße beziehungsweise etwa gleichgroße Luftvolumen "ausgeatmet" und "eingeatmet" werden.

Nach einer Weiterbildung der Erfindung ist vorgesehen, dass der mindestens eine Sensor ein Winddrucksensor, ein Volumenstromsensor für das von der Luftfördereinrichtung geförderte Luftvolumen und/oder ein Drehzahlsensor für die Drehzahl des Ventilators ist. Der Winddrucksensor dient der Erfassung eines Windüberdrucks und/oder eines Windunterdrucks in der Außenatmosphäre, da aufgrund des Windüberdrucks beziehungsweise Windunterdrucks die Förderrate der Luftfördereinrichtung beeinflusst wird. Um dennoch sicherzustellen, dass gleichgroße Luftvolumen "ausgeatmet" und "eingeatmet" werden, wird die Zeitsteuerung beziehungsweise Zeitregelung durch den erfassten Windüberdruck beziehungsweise Windunterdruck zur Erreichung dieses Ziels entsprechend beeinflusst. Entsprechendes gilt für den Volumenstromsensor, der das von der Luftfördereinrichtung geförderte Luftvolumen sensiert und daher über die Zeitsteuerung beziehungsweise Zeitregelung der Verschlusseinrichtung ebenfalls bewirkt, dass gleichgroße Luftvolumen "ausgeatmet" beziehungsweise "eingeatmet" werden. Entsprechendes gilt auch für den Drehzahlsensor, der die Drehzahl des Ventilators erfasst, wobei die Drehzahl des Ventilators als ein Maß für das von dem Ventilator geförderte Luftvolumen verwendet wird, sodass ebenfalls über die Zeitsteuerung beziehungsweise Zeitregelung das genannte Ziel, nämlich ein gleichgroßes Luftvolumen in der ersten Betriebsart "auszuatmen" und in der zweiten Betriebsart "einzuatmen" realisiert werden kann. Die genannten Maßnahmen mittels der verschiedenen Sensoren können einzeln oder alternativ auch in Kombination eingesetzt werden. Der genannte Sensor kann als Extrabauteil in Erscheinung treten oder von bereits vorhandenen Elementen/Parametern des Geräts realisiert werden.

Eine Weiterbildung der Erfindung sieht vor, dass mittels des Winddrucksensors ein Windüberdruck und/oder ein Windunterdruck in einem Außenluftbereich, insbesondere in einem Außenluftbereich benachbart von mindestens einem der Schließorgane erfasst wird, vorzugsweise an einer Außenfassade des Gebäudes. Diese Winddruckerfassung kann beispielsweise an einer oder mehreren Stellen der Außenfassade des Gebäudes erfolgen, in dem sich der zu belüftende beziehungsweise zu entlüftende Raum befindet.

Insbesondere kann vorgesehen sein, dass die Schließorgane in ihrer Geschlossenzeit ganz geschlossen und in ihrer Offenzeit maximal geöffnet sind. Der maximale Bewegungswinkel von Luftklappen kann, muss jedoch nicht, zwischen 0° und 90° liegen, sondern es sind durchaus Konstruktionen denkbar, bei denen die maximale Offenstellung der Luftklappe weniger als 90°, also beispielsweise 70°, insbesondere 68°, beträgt. Die geschlossene Stellung des Schließorgans, insbesondere der Luftklappe, liegt bei 0° vor.

Ferner ist es vorteilhaft, wenn die Drehzahl des Ventilators von der Steuer- und/oder Regeleinrichtung insbesondere auf einen konstanten Drehzahlwert gesteuert und/oder geregelt wird. Dieser Drehzahlwert ist wählbar vorgegeben und wird während der Betriebsführung nicht geändert. Nach einer weiteren Ausführungsform kann jedoch auch vorgesehen sein, dass während der Betriebsführung eine Änderung stattfindet, sodass zunächst ein konstanter erster Drehzahlwert für eine gewisse Zeit gefahren wird und zu einem späteren Zeitpunkt dann ein anderer konstanter Drehzahlwert wiederum für eine bestimmte Betriebszeit eingestellt wird, wobei während der jeweiligen Betriebszeit mit dem ersten Drehzahlwert im ständigen Wechsel "ausgeatmet" und "eingeatmet" wird und Entsprechendes für die Betriebszeit mit dem anderen konstanten Drehzahlwert gilt.

Bevorzugt kann vorgesehen sein, dass der zu be- und entlüftende Raum mehrere Geräte aufweist. Demzufolge "atmen" somit mehrere lufttechnische Geräte in einem Raum ein und aus, das heißt, jedes der Geräte transportiert Außenluft in den Raum hinein und Raumluft aus dem Raum heraus, wobei jedes der Geräte entweder seinen eigenen Takt des "Ausatmens" und des "Einatmens" aufweist oder die Geräte im Takt aufeinander abgestimmt sind. Insbesondere derart, dass sie gegenläufig arbeiten, das heißt, wenn eines der Geräte "ausatmet", atmet ein anderes der Geräte ein. Alternativ ist auch ein Gleichtakt der Geräte denkbar.

Nach einer Weiterbildung der Erfindung ist vorgesehen, dass das Gebäude mehrere Räume besitzt, die jeweils mindestens ein Gerät aufweisen, wobei die Räume mittels mindestens eines Überströmkanals miteinander lufttechnisch verbunden sind. Durch den mindestens einen Überströmkanal stehen die Räume lufttechnisch miteinander in Verbindung, mit der Folge, dass der Überströmkanal für die Be- und Entlüftung der Räume für einen entsprechenden Luftaustausch genutzt wird.

Die Erfindung betrifft ferner ein Verfahren zum Be- und Entlüften von mindestens einem Raum eines Gebäudes oder dergleichen, insbesondere mittels mindestens eines lufttechnischen Geräts, das - wie vorstehend beschrieben - ausgestaltet ist.

Bei dem Verfahren ist vorzugsweise vorgesehen, dass mindestens ein lufttechnisches Gerät verwendet wird, das zwei Luftkanäle aufweist, die jeweils eingangsseitig sowie ausgangsseitig je eine Kanalöffnung aufweisen und die jeweils zwischen den zugehörigen Kanalöffnungen durch nur eine nur eine einzige Luftförderrichtung aufweisende Luftfördereinrichtung strömungstechnisch miteinander verbunden werden, und mit einer Verschlusseinrichtung, die in einer ersten Betriebsart zur Ausbildung eines über die Luftfördereinrichtung führenden ersten Luftwegs die eine Kanalöffnung des einen, ersten Luftkanals mit der einen Kanalöffnung des anderen, zweiten Luftkanals strömungstechnisch verbindet, und die in einer zweiten Betriebsart zur Ausbildung eines über die Luftfördereinrichtung führenden zweiten Luftwegs die andere Kanalöffnung des ersten Luftkanals mit der anderen Kanalöffnung des zweiten Luftkanals strömungstechnisch verbindet.

Insbesondere ist bei dem Verfahren vorgesehen, dass die Verschlusseinrichtung zeitgesteuert und/oder zeitgeregelt wird - insbesondere die jeweilige Offenzeit und die jeweilige Geschlossenzeit von Schließorganen der Verschlusseinrichtung derart gesteuert und/oder geregelt werden - dass in der ersten Betriebsart und in der zweiten Betriebsart jeweils ein gleichgroßes Luftvolumen von der Luftfördereinrichtung gefördert wird. Unter dem Fördern des Luftvolumens von der Luftfördereinrichtung wird im Zuge dieser Anmeldung verstanden, dass dieses Luftvolumen die Luftfördereinrichtung passiert. Es werden zum Beispiel insofern auch Anteile des Luftvolumens darunter subsumiert, die weniger durch die Förderwirkung der Luftfördereinrichtung, beispielsweise durch ein Laufrad eines Ventilators, gefördert werden, sondern beispielsweise aufgrund eines Windüberdrucks und/oder eines Windunterdrucks.

Bei dem erfindungsgemäßen Verfahren ist ferner vorgesehen, dass während der jeweiligen Offenzeit die Schließorgane maximal geöffnet und während der jeweiligen Geschlossenzeit ganz geschlossen werden. Der Winkel einer Luftklappe, die ein Schließorgan bildet, kann beispielsweise 0° in der ganz geschlossenen Stellung betragen. Wird diese Luftklappe maximal geöffnet, so muss der Öffnungswinkel nicht 90° betragen, sondern er kann 90° betragen, er kann jedoch auch einen Wert kleiner als 90° aufweisen, insbesondere 68°.

Eine Weiterbildung des Verfahrens sieht vor, dass bei der genannten Zeitsteuerung und/oder der genannten Zeitregelung der Verschlusseinrichtung ein Windüberdruck und/oder ein Windunterdruck vorzugsweise in einem Außenluftbereich, insbesondere einem Außenluftbereich benachbart von mindestens einem der Schließorgane, berücksichtigt wird/werden. Durch die Winddruckverhältnisse ändert sich die Förderrate der Luftfördereinrichtung. Diese Änderung wird jedoch aufgrund der Zeitsteuerung und/oder der Zeitregelung berücksichtigt, sodass insgesamt das beim "Ausatmen" geförderte Luftvolumen ebenso groß ist wie das beim "Einatmen" geförderte Luftvolumen.

Nach einer Weiterbildung ist es ferner vorteilhaft, wenn das für die genannte Zeitsteuerung und/oder genannte Zeitregelung der Verschlusseinrichtung, insbesondere der Schließorgane, eine Erfassung eines Windüber- und/oder -unterdrucks, eine Luftvolumenerfassung des von der Luftfördereinrichtung geförderten Luftvolumens und/oder eine Erfassung der Drehzahl eines die Luftfördereinrichtung bildenden Ventilators als Maß oder jeweils als Maß für das von der Luftfördereinrichtung geförderte Luftvolumen berücksichtigt wird/werden.

Ferner ist es bei dem Verfahren vorteilhaft, wenn beim Überschreiten eines vorgegebenen Wertes des Windüberdrucks und/oder Unterschreiten eines vorgegebenen Wertes des Windunterdrucks auf ein Querlüftungsbetrieb übergegangen wird, bei dem - insbesondere je Gerät - die erste oder die zweite Betriebsart konstant beibehalten wird, wobei die Verschlusseinrichtung die zugehörigen Kanalöffnungen derart öffnet und/oder schließt, dass eine Lüftung des mindestens einen Raumes von Luv nach Lee erfolgt. Demzufolge tritt in mindestens eine Kanalöffnung von außen her Luft, also als Außenluft, ein und gelangt auf diese Weise in den Raum. Diese Luft durchströmt den Raum und verlässt ihn, beispielsweise mittels eines Überströmkanals oder eines Kanals, der wieder zur Außenatmosphäre führt, wobei aufgrund der Lee-Lage dieses Überströmkanals beziehungsweise Kanals die Luft den Raum über den beschriebenen Weg verlässt.

Ferner ist bei dem Verfahren vorteilhafterweise vorgesehen, dass das Gebäude mit mehreren Räumen versehen ist, die mittels mindestens eines Überströmkanals miteinander lufttechnisch verbunden werden, um ein Überströmen von einem Raum in mindestens einen anderen Raum zu bewirken, wobei vorzugsweise jeder Raum mit mindestens einem Gerät versehen wird.

Schließlich ist es bei dem Verfahren vorteilhaft, wenn der Raum mit mehreren lufttechnischen Geräten versehen wird, wobei mindestens ein Gerät die erste Betriebsart aufweist, während gleichzeitig mindestens ein anderes Gerät die zweite Betriebsart aufweist, und dass bei einem Wechsel des erstgenannten Geräts von der ersten Betriebsart in die zweite Betriebsart das zweitgenannte Gerät von der zweiten Betriebsart in die erste Betriebsart wechselt und so weiter.

Die Zeichnungen veranschaulichen die Erfindung anhand von Ausführungsbeispielen und zwar zeigt:
- Figur 1: eine schematische Ansicht eines lufttechnischen Geräts zur Be- und Entlüftung,
- Figuren 2 und 3: das lufttechnische Gerät der Figur 1 im Zu- und Abluftbetrieb,
- Figuren 4 und 5: eine der Figuren 2 und 3 entsprechende Darstellung des lufttechnischen Geräts, das ein Grundmodul und ein Erweiterungsmodul aufweist, wobei das Erweiterungsmodul ein Wärmerückgewinnungsmodul ist,
- Figur 6: eine der Figur 4 entsprechende Darstellung, jedoch mit zusätzlichem Luftfiltermodul,
- Figur 7: eine der Figur 6 entsprechende Darstellung, jedoch mit zusätzlichem Außenluftklappenmodul,
- Figuren 8 und 9: das lufttechnische Gerät mit Grundmodul, Wärmerückgewinnungsmodul, Luftfiltermodul, Außenluftklappenmodul sowie Fassadenöffnungsmodul sowohl im Zu- als auch im Abluftbetrieb,
- Figuren 10 und 11: eine den Figuren 8 und 9 entsprechende Darstellung, jedoch mit zusätzlichem Schalldämpfermodul,
- Figuren 12 und 13: ein den Figuren 10 und 11 entsprechendes Ausführungsbeispiel, jedoch zusätzlich mit einem Wärmetauschermodul,
- Figur 14: eine der Figur 13 entsprechende Darstellung, jedoch aus einer Blickrichtung schräg von oben,
- Figur 15: ein Gerät gemäß Figur 14, jedoch in perspektivischer Seitenansicht,
- Figur 16 und 17: eine weitere Ausführungsform eines lufttechnischen Geräts in Vorderansicht,
- Figur 18: das lufttechnische Gerät der Figur 16 in Draufsicht,
- Figur 19: eine Verschlusseinrichtung des lufttechnischen Geräts der Figur 18 in schematischer Darstellung,
- Figur 20: die Verschlusseinrichtung der Figur 19 in schematischer Seitenansicht,
- Figuren 21 und 22: eine als Schieber ausgebildete Verschlusseinrichtung des lufttechnischen Geräts,
- Figur 23: ein Diagramm bezüglich der von dem lufttechnischen Gerät beim jeweiligen "Einatmen" und "Ausatmen" geförderten Luftvolumen im Normalbetrieb,
- Figur 24: ein der Figur 23 entsprechendes Diagramm bei Windüberdruck,
- Figur 25: ein der Figur 23 entsprechendes Diagramm,
- Figur 26: ein der Figur 24 entsprechendes Diagramm, jedoch bei Windunterdruck,
- Figuren 27 bis 29: ein Gebäude mit mehreren Räumen, denen jeweils ein lufttechnisches Gerät zugeordnet ist, wobei die Geräte in unterschiedlichen Betriebsweisen betrieben werden,
- Figuren 30 und 31: ein Gebäude mit zwei Räumen, die jeweils ein lufttechnisches Gerät aufweisen, das im Normalbetrieb und im Querlüftungsbetrieb betrieben wird und
- Figur 32: ein Diagramm zur Betriebsführung mindestens zweier Geräte, die einem einzigen Raum zugeordnet sind.

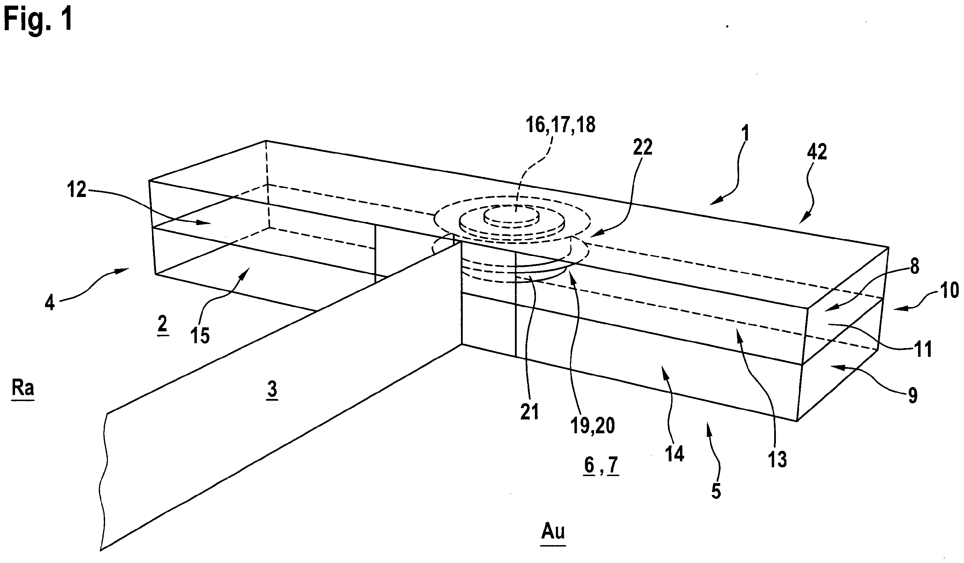

Die Figur 1 zeigt - in schematischer Darstellung - ein lufttechnisches Gerät 1, das zur Be- und Entlüftung eines Raumes 2 eines Gebäudes oder dergleichen dient. Der Raum 2 ist in der Figur 1 nicht im Detail angegeben. Es ist lediglich eine Raumwand 3 oder dergleichen dargestellt, die insbesondere als Fassadenwand ausgebildet sein kann. Das lufttechnische Gerät 1 ist derart installiert, dass ein Teilbereich 4 von ihm dem Raum 2 und ein Teilbereich 5 von ihm einer anderen Lokalität 6 zugeordnet ist. Bei der Lokalität 6 kann es sich vorzugsweise um einen Außenbereich 7 handeln, welcher Außenluft Au aufweist. Im Raum 2 befindet sich Raumluft Ra.

Das lufttechnische Gerät 1 weist zwei Luftkanäle 8 und 9 auf, die vorzugsweise als Doppelluftkanal 10 ausgebildet sind, der eine gemeinsame Trennwand 11 besitzt, die die beiden Luftkanäle 8 und 9 strömungstechnisch voneinander trennt. Der Luftkanal 8 weist vorzugsweise seitlich eine Kanalöffnung 12 und eine Kanalöffnung 13 auf. Der Luftkanal 9 weist vorzugsweise seitlich eine Kanalöffnung 14 und eine Kanalöffnung 15 auf. Die Kanalöffnungen 12 und 15 münden in den Raum 2 und die Kanalöffnungen 13 und 14 münden in die Lokalität 6, insbesondere in den Außenbereich 7. Bevorzugt sind die Kanalöffnungen 12 und 15 einander zugeordnet, d.h., sie liegen benachbart, insbesondere übereinander benachbart zueinander. Gleiches gilt für die Kanalöffnungen 13 und 14.

Den Luftkanälen 8 und 9 ist eine Luftfördereinrichtung 16 derart zugeordnet, dass diese Luft von dem Luftkanal 9 in den Luftkanal 8 fördert, wobei sie - luftkanalmäßig betrachtet - zwischen den Kanalöffnungen 12 und 15 einerseits und den Kanalöffnungen 13 und 14 liegt. Hierzu ist anzumerken, dass das lufttechnische Gerät 1 nur eine einzige Luftfördereinrichtung 16 besitzt, die nur in einer einzigen Luftförderrichtung betrieben wird, vorzugsweise kontinuierlich, also ohne Betriebsunterbrechung, betrieben wird. Im vorliegenden Ausführungsbeispiel ist die Luftfördereinrichtung 16 als Ventilator 17, insbesondere Radialventilator 18, ausgebildet. Die Trennwand 11 weist eine Luftverbindung 19 in Form einer Luftöffnung 20 auf, in die der Radialventilator 18 montiert ist, derart, dass seine axiale Luftansaugungseinrichtung 21 in den Luftkanal 9 ragt und seine radiale Luftausblasungseinrichtung 22 im Luftkanal 8 liegt. Im Betrieb fördert die Luftfördereinrichtung 16, also insbesondere der Radialventilator 18, demzufolge Luft vom Luftkanal 9 in den Luftkanal 8. Alternativ ist jedoch auch eine Luftförderung vom Kanal 8 in den Kanal 9 denkbar, wobei dann jedoch die nachstehend näher erläuterte Verschlusseinrichtung entsprechende Kanalöffnungen öffnen beziehungsweise schließen muss.

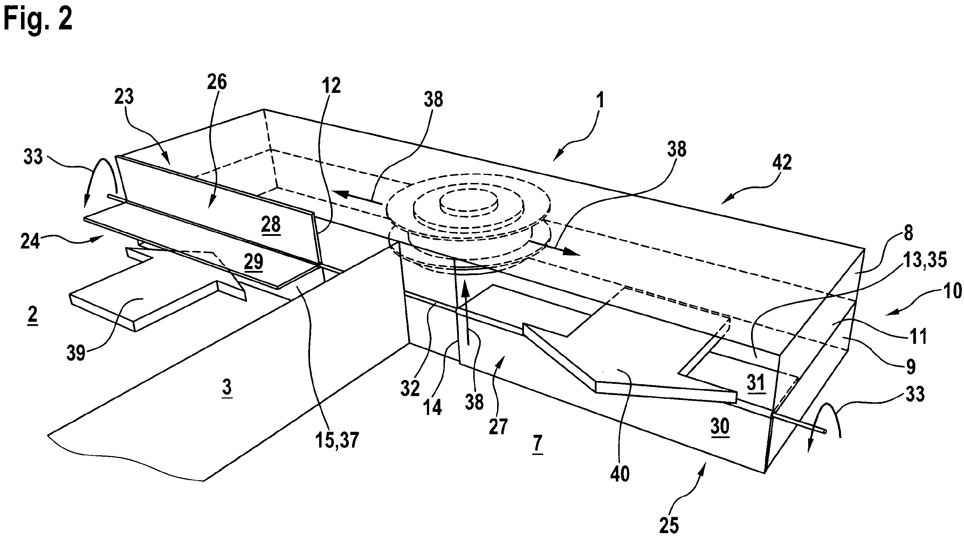

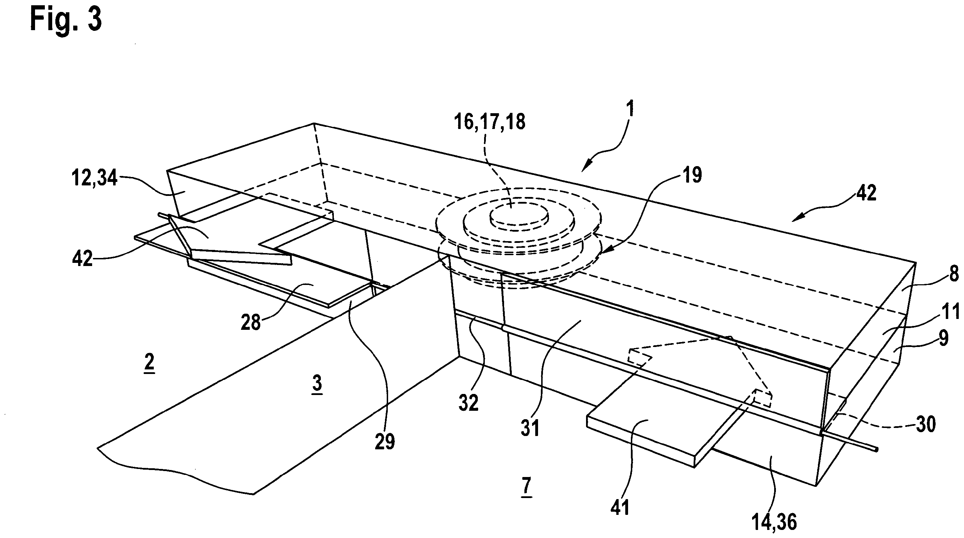

Das lufttechnische Gerät 1 weist eine Verschlusseinrichtung 23 auf, die in der Figur 1 - der Übersichtlichkeit halber - nicht eingezeichnet ist, jedoch aus den der Figur 1 folgenden Figuren hervorgeht. Gemäß Figur 2 ist die Verschlusseinrichtung 23 mit Schließorganen 24 und 25 versehen. Das Schließorgan 24 ist den Kanalöffnungen 12 und 15 und das Schließorgan 25 den Kanalöffnungen 13 und 14 zugeordnet. Im Ausführungsbeispiel der Figur 2 ist jedes Schließorgan 24 und 25 als Winkel-Luftklappe 26 und 27 ausgebildet. Jede Winkel-Luftklappe 26 und 27 weist zwei Klappenblätter 28 und 29 beziehungsweise 30 und 31 auf, wobei die Klappenblätter 28 und 29 einen 90°-Winkel zwischen sich einschließen und die Klappenblätter 30 und 31 ebenfalls in einem 90°-Winkel zueinander stehen. Den Winkel-Luftklappen 26 und 27 ist eine gemeinsame Klappenwelle 32 zugeordnet, auf der sie drehfest, jeweils im Bereich ihrer Winkelspitzen sowie axial beabstandet zueinander derart angeordnet sind, dass das Klappenblatt 28 der Kanalöffnung 12, das Klappenblatt 29 der Kanalöffnung 15, das Klappenblatt 30 der Kanalöffnung 14 und das Klappenblatt 31 der Kanalöffnung 13 zuordenbar ist, wie dies aus den Figuren 2 und 3 hervorgeht. In der Darstellung der Figur 2 nimmt die Winkel-Luftklappe 26 eine Stellung ein, in der das Klappenblatt 28 die Kanalöffnung 12 verschließt und das Klappenblatt 29 die Kanalöffnung 15 freigibt. Gleichzeitig verschließt das Klappenblatt 30 die Kanalöffnung 14 und das Klappenblatt 31 gibt die Kanalöffnung 13 frei. Erfolgt mittels einer nicht dargestellten Antriebsvorrichtung ein Verdrehen der Klappenwelle 32 um 90° (Pfeile 33), so ergibt sich die Situation gemäß Figur 3, in der das Klappenblatt 28 die Kanalöffnung 12 freigibt und das Klappenblatt 29 die Kanalöffnung 15 verschließt. Gleichzeitig gibt das Klappenblatt 30 die Kanalöffnung 14 frei und das Klappenblatt 31 verschließt die Kanalöffnung 13. In Figur 2 liegt das Klappenblatt 31 innerhalb des Luftkanals 8 und zwar parallel und oberhalb der Trennwand 11. Das Klappenblatt 29 ragt in Horizontalstellung in den Raum 2 hinein. In der Stellung der Verschlusseinrichtung 23 gemäß Figur 3 ist das Klappenblatt 28 in eine Horizontalstellung verschwenkt und ragt in den Raum 2 hinein, während das Klappenblatt 30 in den Luftkanal 9 hineingeschwenkt wurde und nunmehr in Parallelstellung zur Trennwand 11 unterhalb dieser liegt.

In den Ausführungsbeispielen der Figuren 2 und 3 bildet die Kanalöffnung 12 eine Ausströmöffnung 34 und die Kanalöffnung 13 eine Ausströmöffnung 35. Die Kanalöffnung 14 bildet eine Einströmöffnung 36 und die Kanalöffnung 15 eine Einströmöffnung 37.

Nachfolgend wird der Betrieb des lufttechnischen Geräts zur Be- und Entlüftung des Raumes 2 näher erläutert: Im Betrieb fördert die Luftfördereinrichtung 16 gemäß der Pfeile 38 (Figur 2) Luft vom Luftkanal 9 in den Luftkanal 8. Aufgrund der Stellungen der Schließorgane 24 und 25 der Verschlusseinrichtung 23 wird durch die geöffnete Kanalöffnung 15 gemäß Pfeil 39 Raumluft Ra angesaugt, die in den Luftkanal 9 strömt, gemäß der Pfeile 38 über die Luftfördereinrichtung 16 und die Luftverbindung 19 in den Luftkanal 8 gelangt und von dort aus der geöffneten Kanalöffnung 13 in den Außenbereich 7 austritt (Pfeil 40). Während dieser Betriebsart, die zum Beispiel eine erste Betriebsart darstellen kann, wird also Raumluft nach außen transportiert. Die Kanalöffnungen 12 und 14 sind während dieser Betriebsart geschlossen. Nach einer vorgegebenen Zeitdauer wechselt das lufttechnische Gerät 1 in eine andere Betriebsart, die zum Beispiel als zweite Betriebsart bezeichnet werden kann, die in Figur 3 dargestellt ist, in der mittels der erwähnten Antriebsvorrichtung die Verschlusseinrichtung 23 derart umgeschaltet wird, dass Außenluft Au gemäß Pfeil 41 von der Luftfördereinrichtung 16 durch die geöffnete Kanalöffnung 14 angesaugt wird, die Luftfördereinrichtung 16 sowie die Luftverbindung 19 durchsetzt und insofern vom Luftkanal 9 in den Luftkanal 8 gelangt und dann aus der geöffneten Kanalöffnung 12 gemäß Pfeil 42 in den Raum 2 eingebracht wird. Ein Vergleich der Figuren 2 und 3 verdeutlicht, dass für die Umschaltung der Betriebsart die Luftfördereinrichtung 16 ihre Förderrichtung nicht ändern muss, sondern ihre einzige Luftförderrichtung beibehält. Für die beiden Betriebsarten ist auch nur eine einzige Luftfördervorrichtung 16 erforderlich. Die Betriebsart gemäß Figur 3 kann als "Einatmen" bezeichnet werden, da in den Raum 2 Außenluft Au (Frischluft) gelangt und die Betriebsart gemäß Figur 2 kann als "Ausatmen" bezeichnet werden, da Raumluft Ra aus dem Raum 2 nach außen abgeführt wird. Vorzugsweise werden die beiden erwähnten Betriebsarten im fortlaufenden Wechsel eingenommen, d.h., eine vorbestimmte Zeit wird das Gerät 1 "einatmen" und anschließend wird dann wiederum eine vorbestimmte Zeit "ausatmen" und so weiter.

Aufgrund der Erfindung ist daher ein lufttechnisches Gerät 1, insbesondere ein dezentrales lufttechnisches Gerät 1, geschaffen, das zur Be- und Entlüftung verwendet wird und nur einen einzigen Radialventilator 18 bei gleichbleibender Drehrichtung dieses Radialventilators 18 einen wechselnden Be- und Entlüftungsbetrieb vornimmt. Vorzugsweise ist eine gemeinsame Fassadenöffnung vorgesehen, die in den Außenbereich 7 führt, um dort Abluft auszugeben und Außenluft anzusaugen. Das erfindungsgemäße lufttechnische Gerät 1 kann als Fassadengerät ausgelegt sein, insbesondere für den Boden-, Brüstungs- oder Deckeneinbau. Vorzugsweise ist eine gemeinsame Raumöffnung vorgesehen, um dort Außenluft auszugeben und Raumluft anzusaugen.

Die vorstehenden Ausführungen zeigen, dass die Verschlusseinrichtung 23 nur einen einzigen Antrieb benötigt um das "Einatmen" und das "Ausatmen" durchzuführen. Für das Öffnen beziehungsweise Schließen der Schließorgane 24 und 25 ist nur eine Drehung der Schließorgane 24 und 25 um 90° erforderlich ist, wobei dieses Verdrehen um 90° hin- und her erfolgt, um die erste und die zweite Betriebsart im Wechsel durchzuführen. Insbesondere kann nach einer Weiterbildung der Erfindung vorgesehen sein, dass die Verschlusseinrichtung 23 entsprechend schnell öffnet und schließt, sodass es zu einer impulsartigen Luftführung kommt, insbesondere Luftzuführung von Frischluft kommt, durch welche die zugeführte Luft sich noch besser mit der im Raum befindlichen Raumluft mischt und daher ein angenehmes Klima im Raum 2 bewirkt. Als Luftfördereinrichtung 16 wird insbesondere ein Radialventilator 18 eingesetzt, der axial mittig zu seinem Laufrad ansaugt und die Luft dann radial von innen nach außen fördert. Im dargestellten Ausführungsbeispiel der Figuren 1 und 3 befindet sich die Luftfördereinrichtung 16, insbesondere der Radialventilator 18, im Luftkanal 8, also im oberen Luftkanal. Selbstverständlich ist auch eine Bauform denkbar, in der er sich im unteren Luftkanal 9 befindet, wobei er dann beispielsweise gegenüber den Ausführungsbeispielen der Figuren 1 bis 3 umgekehrt fördert, also vom Luftkanal 8 in den Luftkanal 9, sodass dementsprechend die Kanalöffnungen 12 bis 15 geöffnet beziehungsweise verschlossen werden müssen, um die beiden Betriebsarten, insbesondere im laufenden Wechsel, durchzuführen.

Aufgrund des lufttechnischen Geräts 1 liegt eine Be- und Entlüftungseinrichtung vor, die ein geringes Bauvolumen hat, konstruktiv einfach aufgebaut ist und mit nur einer einzigen Luftfördereinrichtung frische Luft in einen Raum einbringt und verbrauchte Luft aus dem Raum abführt, wobei das Gerät "atmet", also das Zuführen eine Zeitlang und danach das Abführen eine Zeitlang im laufenden Wechsel vornimmt. Es wurde bereits erwähnt, dass eine einzige Fassadenöffnung für das Gerät für das Zu- und Abführen der Luft ausreicht. Dementsprechend kann im Raum 2 auch nur eine einzige Raumöffnung vorgesehen sein, die Fassadenöffnung und die Raumöffnung ist dann mit den entsprechenden Kanalöffnungen des lufttechnischen Geräts strömungstechnisch verbunden.

Selbstverständlich ist auch ein reiner Zuluftbetrieb oder auch ein reiner Abluftbetrieb möglich, wenn die entsprechende Betriebsart beibehalten bleibt. Der erwähnte zyklische Ab- und Zuluftbetrieb ist - wie bereits erläutert - ebenfalls durchführbar. Wird aufgrund sehr schnell schließender Verschlussorgane 24 und 25 eine pulsierende Raumströmung erzeugt, so ergibt sich ein hoher Komfort.

Mit dem erfindungsgemäßen lufttechnischen Gerät 1 lässt sich eine Be- und Entlüftung vornehmen, derart, dass abwechselnd unterschiedliche Betriebsarten eingenommen werden, bei denen eine wählbare Zeitlang Außenluft über einen Zuluftweg als Zuluft in einen Raum 2 eingebracht wird und - nach Ablauf der wählbaren Zeit - für eine daran anschließende wählbare Zeitspanne Abluft (Raumluft) aus dem Raum über einen Abluftweg nach außen als Fortluft abgeführt wird. Die beiden Betriebsarten können insbesondere nacheinander fortlaufend wechselnd ausgeführt werden, wobei die Zeitdauern mittels einer in den Figuren nicht dargestellten Steuer- und/oder Regeleinrichtung vorgegeben werden können. Diese Steuer- und/oder Regeleinrichtung steuert beziehungsweise regelt vorzugsweise auch noch andere Komponenten des lufttechnischen Geräts 1, insbesondere wird damit die Luftfördereinrichtung 16 betrieben, also die Luftfördermenge pro Zeiteinheit bestimmt. So ist es denkbar, dass diese im Zuge des Betriebs konstant bleibt oder auf einen gewünschten Wert erniedrigt beziehungsweise auf einen gewünschten Wert erhöht wird. Ferner steuert beziehungsweise regelt die erwähnte Steuer- und/oder Regeleinrichtung die Verschlusseinrichtung 23, d.h., es wird der "Takt" des Öffnens beziehungsweise Schließens vorgegeben. Zur Berücksichtigung von Einflussgrößen (Parameter) ist die Steuer- und/oder Regeleinrichtung mit mindestens einem Eingang versehen, an dem beispielsweise Daten gegeben werden und/oder an den mindestens ein Sensor angeschlossen ist. Im einfachsten Fall liegt ein Eingang für einen Parameter vor. Es können jedoch auch mehrere Eingänge für mehrere Parameter vorhanden sein. Entsprechendes gilt für die Sensoren. Als Parameter kommen beispielsweise die Temperatur im Raum 2, die Luftqualität im Raum 2, die Luftfeuchte im Raum 2, die aktuelle Personenzahl im Raum 2, die Außenlufttemperatur und/oder die Außenluftfeuchte und so weiter in Anwendung.

Die vorstehenden Ausführungen beziehen sich auf die Figuren 1 bis 3, sind jedoch in entsprechender Weise auch auf die nachfolgenden Ausführungsbeispiele gemäß der weiteren Figuren gerichtet, gelten also in entsprechender Weise, sodass nicht zu jedem folgenden Ausführungsbeispiel jeweils Wiederholungen vorgetragen werden.

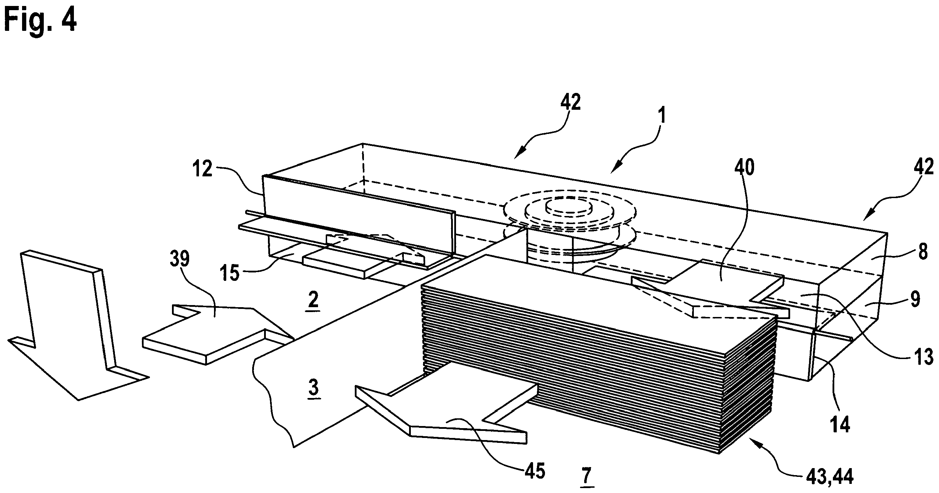

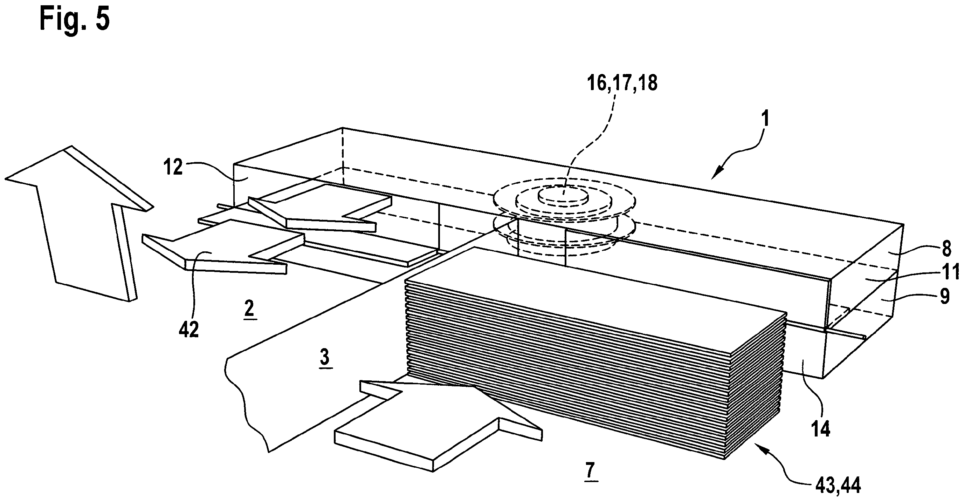

Die Figuren 4 und 5 zeigen ein weiteres Ausführungsbeispiel des lufttechnischen Geräts 1. In den Figuren 1 bis 3 weist das lufttechnische Gerät 1 nur ein Grundmodul 42 auf. Diesem kann - je nach Einsatzort und Einsatzzweck - mindestens ein Erweiterungsmodul 43 zugeordnet werden. Bei dem Erweiterungsmodul 43 der Figuren 4 und 5 handelt es sich um ein Wärmerückgewinnungsmodul 44, also ein Modul, das beim Durchströmen die Temperatur der es durchströmenden Luft annimmt beziehungsweise etwa annimmt und zu einem späteren Zeitpunkt beim Durchströmen von Luft diese Temperatur wieder abgibt, sodass hierdurch beispielsweise Luft gekühlt oder erwärmt werden kann. Das Wärmerückgewinnungsmodul 44 ist - gemäß der Figuren 4 und 5 - den Kanalöffnungen 13 und 14 nachgeschaltet beziehungsweise vorgeschaltet, je nachdem, ob man den das lufttechnische Gerät 1 verlassenen Luftstrom oder den in das lufttechnische Gerät 1 einströmenden Luftstrom betrachtet. Gemäß Figur 4, die ein "Ausatmen" zeigt, wird Raumluft Ra gemäß Pfeil 39 vom lufttechnischen Gerät 1 aus dem Raum 2 abgeführt, wobei die Raumluft Ra gemäß Pfeil 40 das Grundmodul 42 durch die Kanalöffnung 13 verlässt und dann das Erweiterungsmodul 43, also das Wärmerückgewinnungsmodul 44, durchsetzt und anschließend gemäß Pfeil 45 in den Außenbereich 7 gelangt. In der Betriebsart "Einatmen" gemäß Figur 5 gelangt Außenluft Au zunächst durch das Wärmerückgewinnungsmodul 44 und dann über die Kanalöffnung 14 und die Luftfördereinrichtung 16 sowie die Kanalöffnung 12 gemäß Pfeil 42 in den Raum 2. Demzufolge geht sowohl der Zuluftstrom als auch der Abluftstrom durch das Wärmerückgewinnungsmodul 44, das beim "Ausatmen", beispielsweise im Winter, durch warme Raumluft erwärmt wird und beim "Einatmen" kalte Außenluft vorwärmt. In entsprechender Weise arbeitet das lufttechnische Gerät 1 im Sommer, indem kühlere Raumluft (kühler als die Außenluft) das Wärmerückgewinnungsmodul 44 kühlt und warme Außenluft beim Durchströmen des Wärmerückgewinnungsmoduls 44 abgekühlt wird und als abgekühlte Luft in den Raum 2 gelangt.

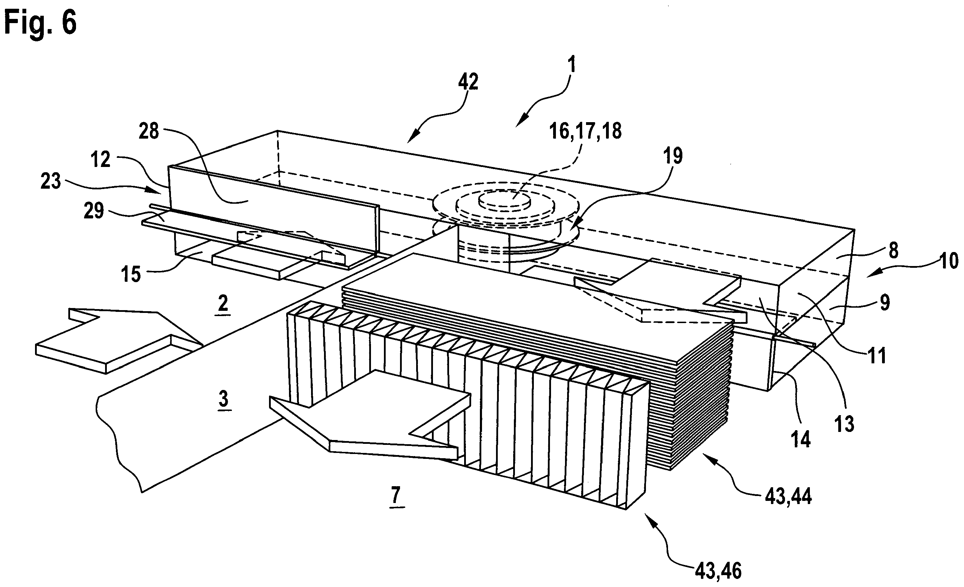

Die Figur 6 zeigt ein weiteres Ausführungsbeispiel, das dem Ausführungsbeispiel der Figuren 4 und 5 entspricht, sodass darauf verwiesen wird. Unterschiedlich ist lediglich, dass dem Erweiterungsmodul 43, das als Wärmerückgewinnungsmodul 44 ausgebildet ist, ein weiteres Erweiterungsmodul 43 nachgeschaltet ist, das als Luftfiltermodul 46, insbesondere Außenluftfiltermodul, ausgebildet ist. Sowohl der Zuluftstrom als auch der Abluftstrom durchsetzt im Betrieb das Wärmerückgewinnungsmodul 44 und das Luftfiltermodul 46, sodass gefilterte Außenluft Au in den Raum 2 gelangt ("Einatmen") und beim "Ausatmen" Raumluft Ra das Luftfiltermodul 43 umgekehrt durchsetzt und hierdurch mögliche Ablagerungen von der Schmutzseite des Luftfiltermoduls 46 abbläst, sodass ein Reinigungseffekt entsteht.

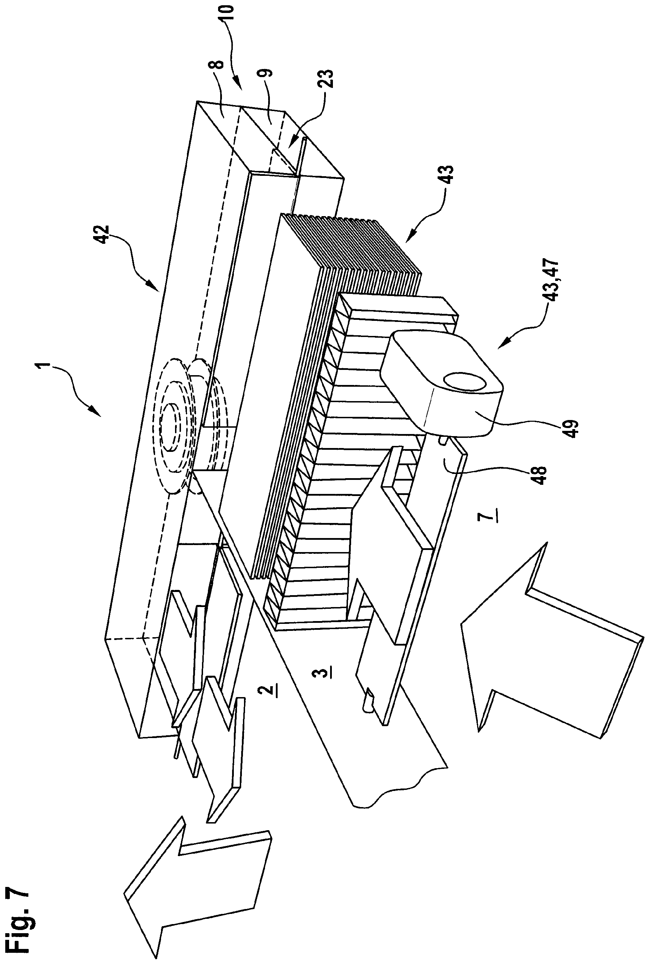

Die Figur 7 zeigt ein weiteres Ausführungsbeispiel des lufttechnischen Geräts 1, das dem Ausführungsbeispiel der Figur 6 entspricht, sodass darauf und auf die zugehörige Beschreibung verwiesen wird. Zusätzlich ist lediglich ein weiteres Erweiterungsmodul 43 vorgesehen, das als Außenluftklappenmodul 47 ausgebildet ist, welches eine Außenluftklappe 48 und einen Klappenantrieb 49 aufweist. Der Klappenantrieb 49 wird von der bereits erwähnten Steuer- und/oder Regeleinrichtung betrieben. Im ausgeschalteten Betrieb des lufttechnischen Geräts 1 ist die Außenluftklappe 48 geschlossen, sodass eine Schutzfunktion vorliegt. In Betrieb wird die Außenluftklappe 48 geöffnet, sodass der Zuluftstrom eintreten und der Abluftstrom austreten kann. Insbesondere kann das Außenluftklappenmodul 47 einen Federrücklauf aufweisen, der im Notfall (zum Beispiel bei Notaus) ein Notschließen der Außenluftklappe 48 bewirkt.

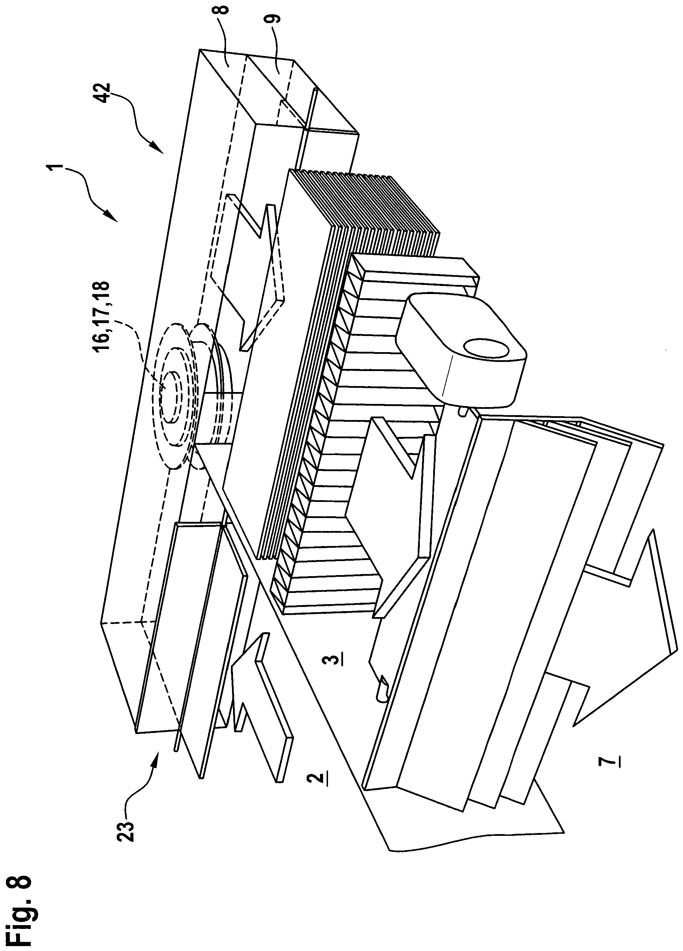

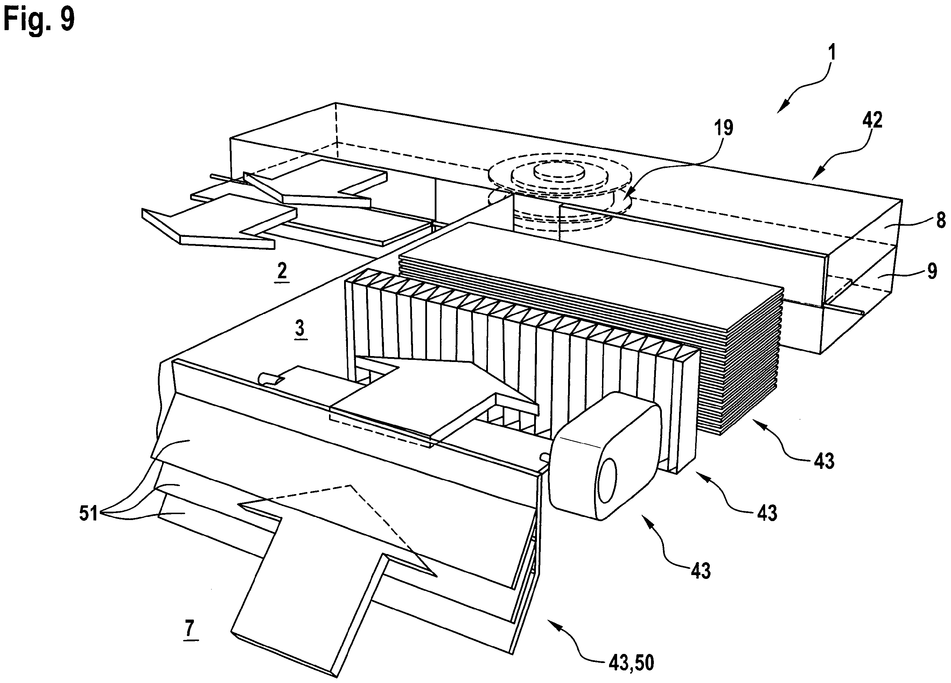

Die Figuren 8 und 9 betreffen ein weiteres Ausführungsbeispiel eines lufttechnischen Geräts 1, das dem Ausführungsbeispiel der Figur 7 entspricht, wobei sich an das Außenluftklappenmodul 47 ein weiteres Erweiterungsmodul 43, in Form eines Fassadenöffnungsmoduls 50 anschließt. Hierunter ist eine Einrichtung zu verstehen, die mittels Lamellen 51 geschützte Einlassschlitze für Zuluft aufweist. Im Falle der Abluft bilden diese Schlitze Luftaustrittsschlitze.

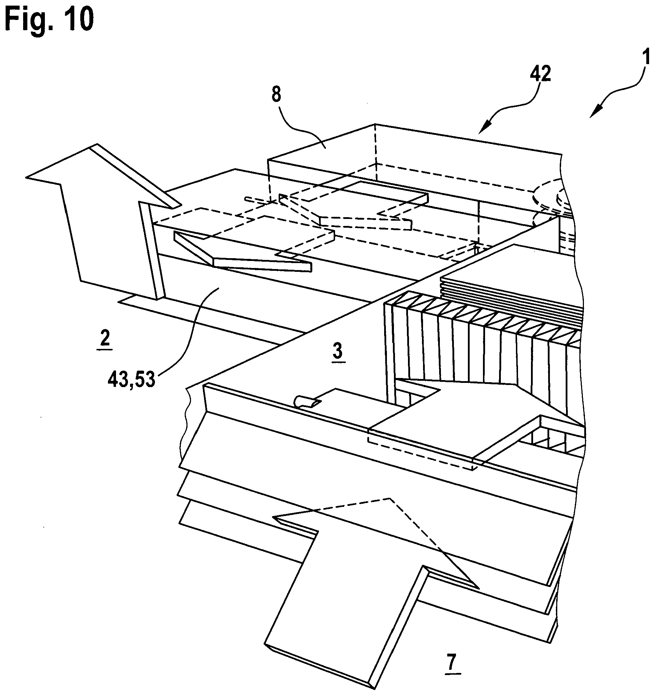

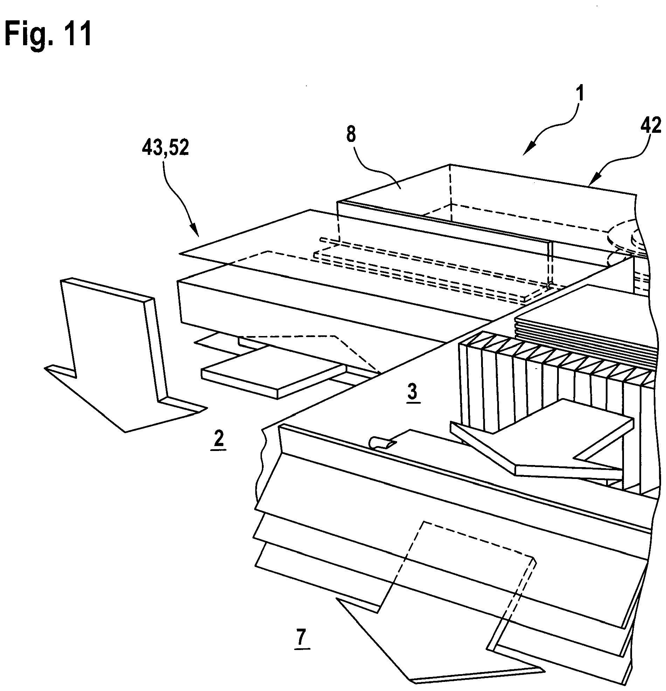

Die bisherigen Erweiterungsmodule 43 werden der Außenbereichseite des lufttechnischen Geräts 1 zugeordnet. Die Figuren 10 und 11 zeigen ein weiteres Erweiterungsmodul 43, das der Raumseite des lufttechnischen Geräts 1 zugeordnet wird. Bei diesem Erweiterungsmodul 43 handelt es sich um ein Schalldämpfermodul 52, das den Kanalöffnungen 12 und 15 vor- beziehungsweise nachgeschaltet ist (je nach Luftstromrichtung gesehen). Dementsprechend handelt es sich bei dem Ausführungsbeispiel der Figuren 10 und 11 um ein lufttechnisches Gerät 1 gemäß der Figuren 8 und 9, das zusätzlich noch das Schalldämpfermodul 52 besitzt. Demgemäß wird in den Raum 2 eintretende Zuluft hinsichtlich der Geräuschentwicklung schallgedämpft und auch bei aus dem Raum 2 abgeführter Luft wird eine entsprechende Schalldämpfwirkung erzielt. Vorzugsweise weist das Schalldämpfermodul 52 einen Schalldämpfkörper 53 auf, der bei einer Zuluftführung auf der einen Seite und bei der Abluftführung auf der anderen Seite überströmt wird, wodurch die Schalldämpfwirkung erzielt ist. Die beiden unterschiedlichen Betriebsarten "Einatmen" und "Ausatmen" gehen aus den Figuren 10 und 11 hervor.

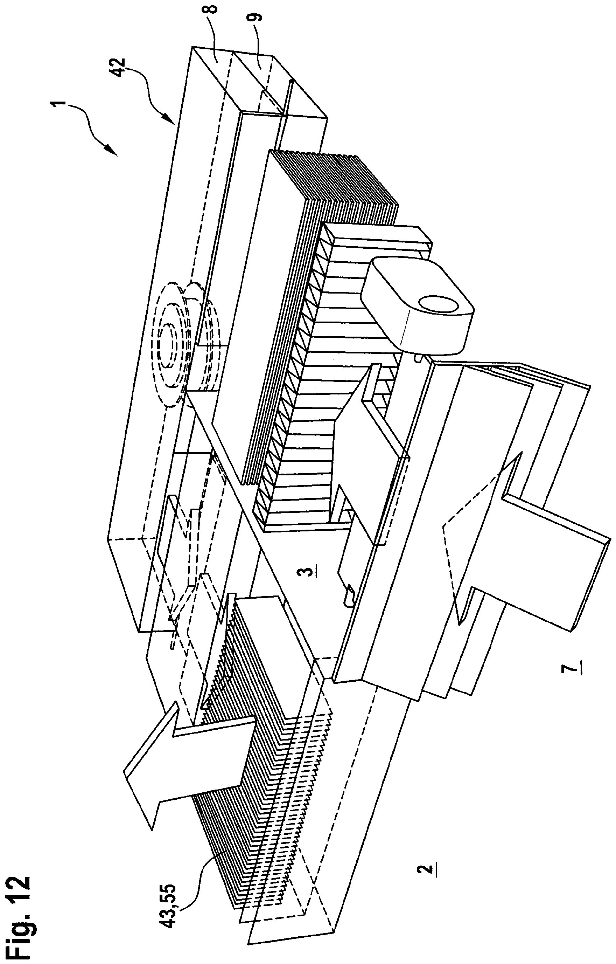

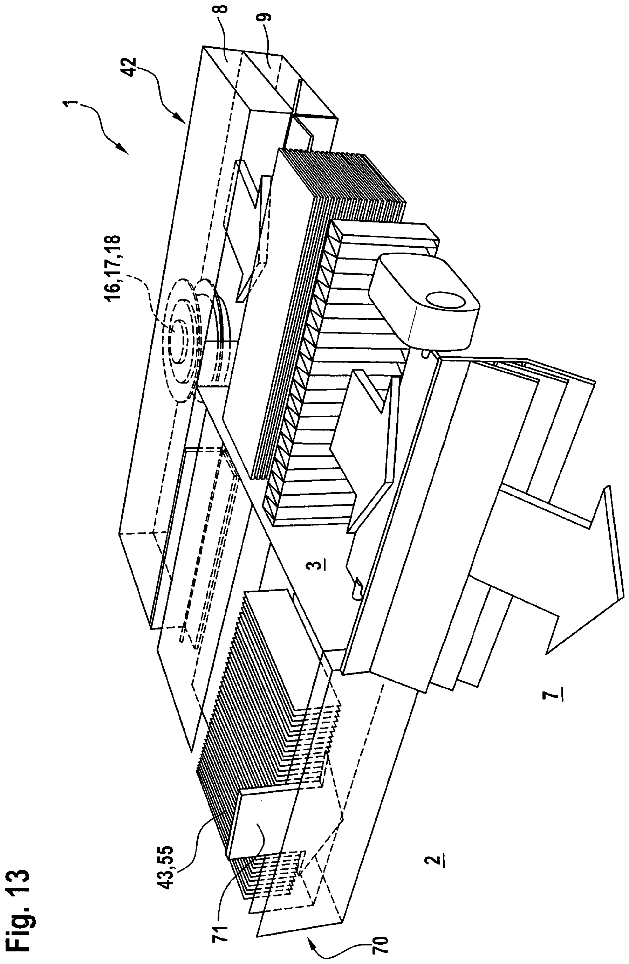

Die Figuren 12 und 13 zeigen eine Ausführungsform des lufttechnischen Geräts 1, die der Ausführungsform der Figuren 10 und 11 entspricht, sodass auf diese Figuren nebst Beschreibung verwiesen wird. Zusätzlich ist lediglich ein weiteres Erweiterungsmodul 43 in Form eines Wärmetauschermoduls 54 vorgesehen, das sich an das Schalldämpfermodul 52 anschließt. Bei diesem Wärmetauschermodul 54 ist eine Luftwegtrennung derart vorgesehen, dass - gemäß Figur 12 - beim "Einatmen" die als Zuluft zugeführte Außenluft nach Verlassen des Grundmoduls 42 und Durchströmen des Schalldämpfermoduls 52 einen Wärmetauscher 55 des Wärmetauschermoduls 54 durchströmt und dann in den Raum 2 eintritt. Die Anordnung ist derart getroffen, dass in der Betriebsart "Ausatmen" Raumluft Ra nicht durch das Wärmetauschermodul 54 strömt, sondern gemäß Figur 13 an diesem vorbeiströmt, beispielsweise unterhalb dieses Wärmetauschermoduls 54 strömt, und dann über das Schalldämpfermodul 52 zum Grundmodul 42 gelangt und dann entsprechend über die verschiedenen Erweiterungsmodule 43 in den Außenbereich 7 gefördert wird. Demzufolge wird in den Raum 2 gelangende Zuluft durch ein entsprechendes Betreiben des Wärmetauschers 55 des Wärmetauschermoduls 54 gekühlt oder erwärmt. Hierzu sind entsprechende Anschlüsse an dem Wärmetauscher 55 für ein Kühl- oder Wärmemittel vorhanden. Beispielsweise kann es sich um Wasseranschlüsse handeln, die gekühltes oder erwärmtes Wasser führen können, wodurch die durchströmende Luft entsprechend gekühlt oder erwärmt wird. In der Betriebsart "Ausatmen" wird das Wärmetauschermodul 54 bypassartig durch einen entsprechenden Luftführungsweg 70 (Figur 13, Pfeil 71) umgangen.

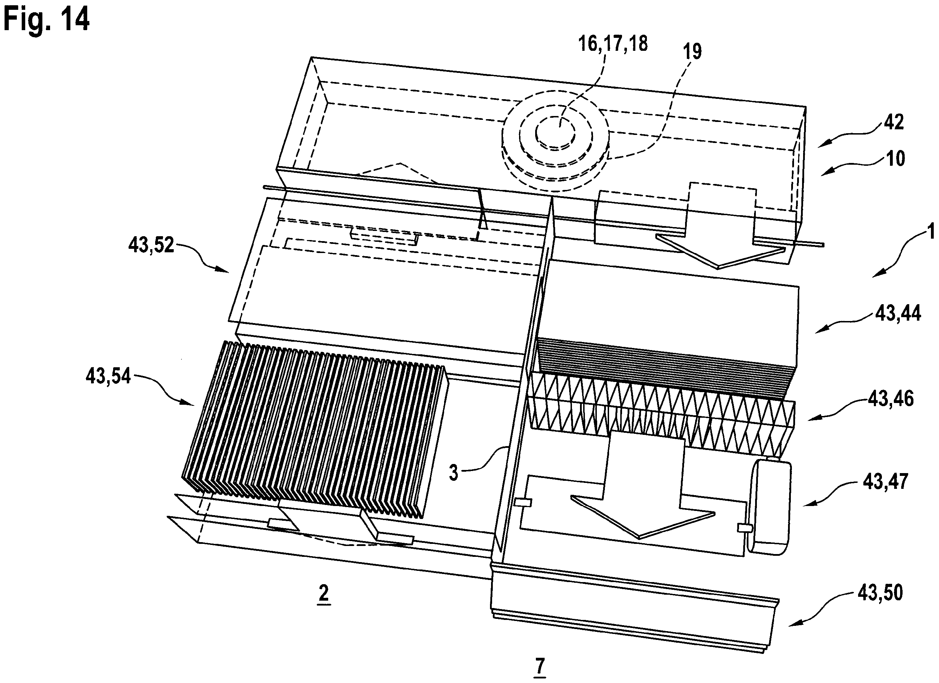

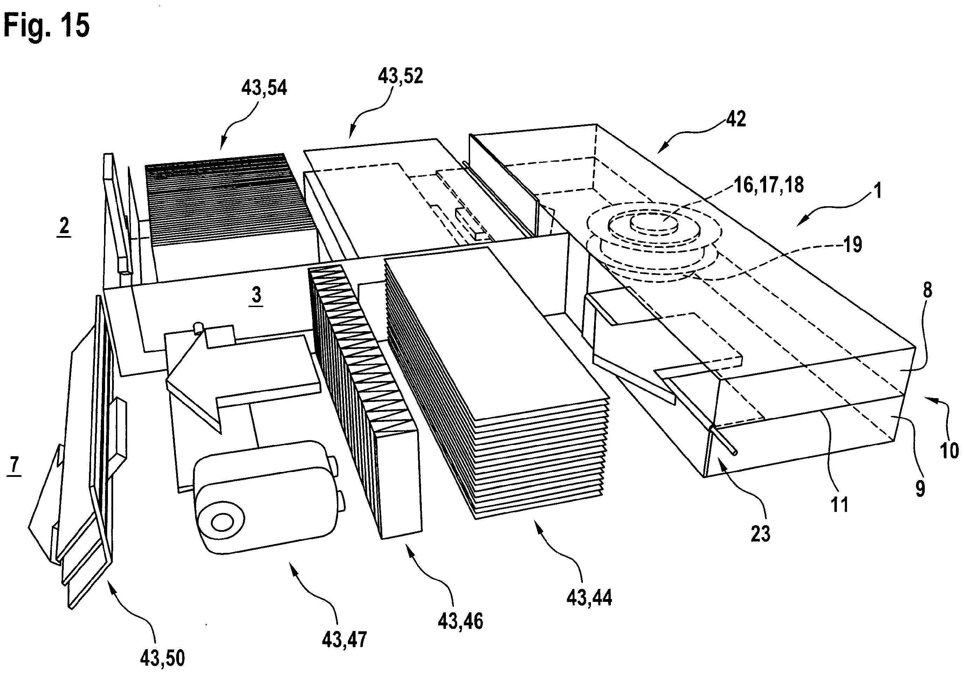

Die Figuren 14 und 15 zeigen den Komplettaufbau des lufttechnischen Geräts 1 mit der großen Anzahl von zusätzlichen Erweiterungsmodulen 43, die jeweils einzeln oder zu mehreren in gewünscht beliebiger Reihenfolge, vorzugsweise in der Reihenfolge gemäß mindestens einer der Figuren 4 bis 15, an das Grundmodul 42 anschließbar sind, wobei ein oder mehrere bisher nicht erläuterte(s) Erweiterungsmodul(e) auch mehrere Funktionen der erwähnten Erweiterungsmodule enthalten kann/können, beispielsweise sowohl eine Wärmerückgewinnungsfunktion als auch eine Luftfilterfunktion in einem Modul. Es sind demzufolge alle möglichen Kombinationen als Einzel-Erweiterungsmodule oder als zusammengefasste Erweiterungsmodule denkbar. Daher liegt ein sehr flexibles System vor, das je nach Einsatzort und Einsatzzweck erweitert werden kann und das nicht für jede gewünschte Funktionalität ein gesondertes lufttechnisches Gerät 1 erfordert, sondern modulartig zusammengestellt wird.

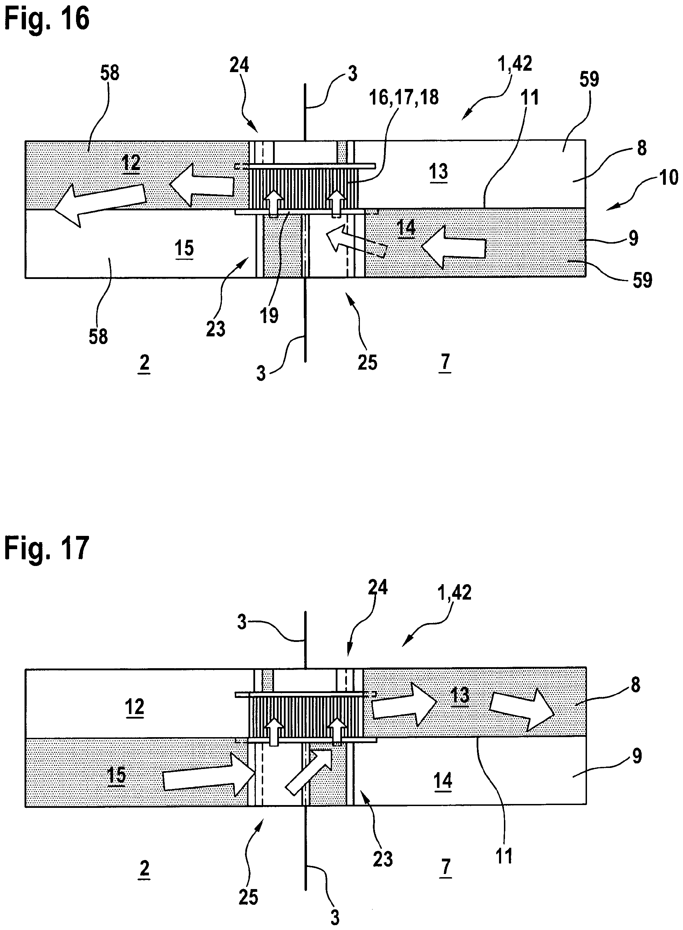

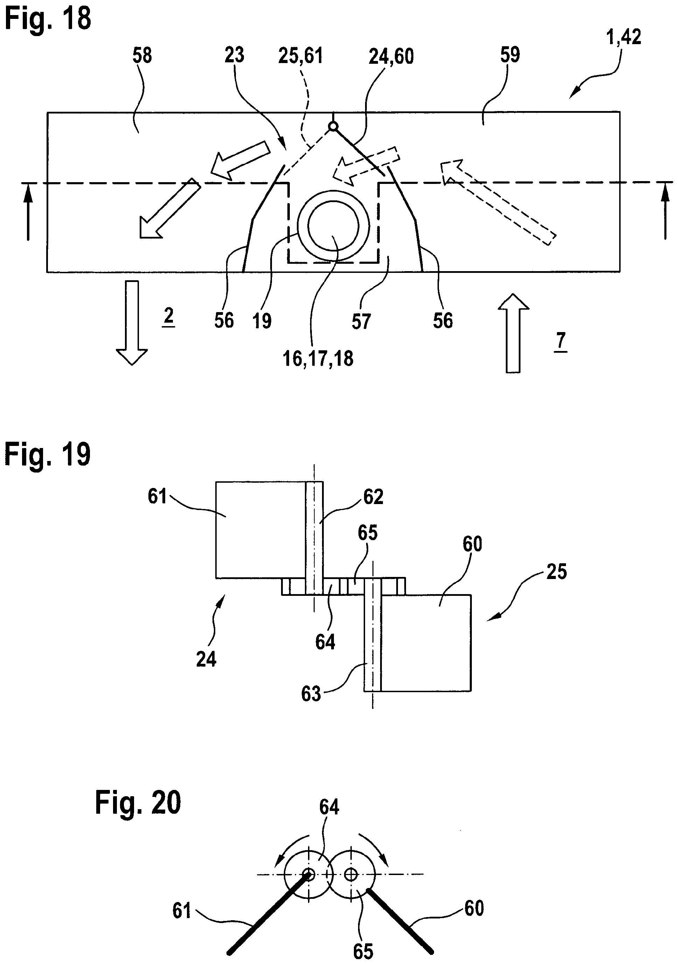

Die Figuren 16 bis 20 zeigen ein weiteres Ausführungsbeispiel eines lufttechnischen Geräts 1, und zwar nur dessen Grundmodul 42. Diesem Grundmodul 42 können bei Bedarf ein oder mehrere Erweiterungsmodule 43 zugeordnet werden. Unterschiedlich zu den Ausführungsbeispielen der Figuren 1 bis 14 ist lediglich eine andersartige Ausbildung der Verschlusseinrichtung 23, sodass nachstehend nur auf diese eingegangen wird. Alle übrigen Ausführungen entsprechen den Ausführungen des Figuren 1 bis 14, sodass darauf verwiesen wird. Die Figur 16 zeigt das Grundmodul 42 des lufttechnischen Geräts 1 beim "Einatmen"; die Figur 17 beim "Ausatmen". Die Figur 18 zeigt eine Draufsicht und - mit gestrichelter Linie - eine Schnittführung, sowie sie bei den Frontansichten der Figuren 16 und 17 vorliegt. Die Verschlusseinrichtung 23 des Ausführungsbeispiels des lufttechnischen Geräts 1 der Figuren 16 bis 20 erfordert keine Öffnung oder Absperrung der Kanalöffnungen 12 bis 15, d.h., dort sind keine Schließorgane vorgesehen. Vielmehr ist sowohl im Luftkanal 8 als auch im Luftkanal 9 mittels Trennwände 56 eine Luftkammer 57 vorgesehen, wobei die Luftkammer 57 des Luftkanals 8 über die Luftverbindung 19 und somit über die Luftfördereinrichtung 16, mit der Luftkammer 57 des Luftkanals 9 strömungstechnisch in Verbindung steht. Die beiden Trennwände 56 jeder Luftkammer 57 erstrecken sich nicht über die volle Tiefe des lufttechnischen Geräts 1, sondern lassen dort Raum für Schließorgane 24 und 25 der Verschlusseinrichtung 23. Aufgrund der vorstehend beschriebenen Ausgestaltung wird jeder Luftkanal 8, 9 in zwei Kanalabschnitte 58 und 59 unterteilt. Die erwähnten Schließorgane 24 und 25 sind als gegenläufige Luftklappen 60, 61 ausgebildet, die jeweils zwei Stellungen einnehmen, indem sie in der einen Stellung mit der einen Trennwand 56 und in der anderen Stellung mit der anderen Trennwand 56 der jeweiligen Luftkammer 57 zusammenwirken. Mit der Folge, dass in der einen Stellung der jeweiligen Luftklappe 60, 61 ein Zugang zu dem zugehörigen Kanalabschnitt 58 und ein Verschluss zum zugehörigen Kanalabschnitt 59 geschaffen ist und in der anderen Stellung ein Verschluss des entsprechenden Kanalabschnitts 58 und ein Zugang zum entsprechenden Kanalabschnitt 59 des jeweiligen Luftkanals 8 beziehungsweise 9 geschaffen ist. Die Luftklappe 60 ist dem Luftkanal 8 und die Luftklappe 61 dem Luftkanal 9 zugeordnet.

Die Figuren 19 und 20 verdeutlichen, dass die Luftklappen 60, 61 gegenläufig arbeiten. Es ist zu erkennen, dass sie jeweils auf einer Welle 62 beziehungsweise 63 angeordnet sind, wobei die beiden Wellen über kämmende Zahnräder 64, 65 miteinander verbunden sind. Wird nun mittels einer nicht dargestellten Antriebsvorrichtung die Verschlusseinrichtung 23 betätigt, so wird - gemäß Figur 20 - die eine Welle 63 im Uhrzeigersinn und die andere Welle 62 im Gegenuhrzeigersinn bewegt. Entsprechendes gilt beim umgekehrten Verschwenken der Luftklappen 60 und 61.

Insgesamt ergibt sich bei dem Ausführungsbeispiel der Figuren 16 bis 20 folgende Funktion, wobei für den Betrieb "Einatmen" auf die Figur 16 und die Figur 18 verwiesen wird und für den Betrieb "Ausatmen" auf die Figur 17. Die Figur 18 wird dann eine entsprechende andere Luftführung aufweisen, wobei jedoch derartige Pfeile der Übersichtlichkeit halber nicht in diese Figur eingezeichnet sind. Im Betrieb "Einatmen" tritt Außenluft in die Kanalöffnung 14 ein und gelangt in den Kanalabschnitt 59 des Luftkanals 9 und aufgrund der sich in Offenstellung befindlichen Luftklappe 61 in die zugehörige Luftklammer 57. Diese Luft gelangt nicht in den Kanalabschnitt 58 des Luftkanals 9, da die Luftklappe 61 die entsprechende Luftkammer 57 absperrt. Von der Luftkammer 57 des zugeordneten Luftkanals 9 gelangt die Luft über die Luftverbindung 19 beziehungsweise die Luftfördereinrichtung 16 in die dem Luftkanal 8 zugeordnete Luftkammer 57 und von dort in den Kanalabschnitt 58 des Luftkanals 8, da die Luftklappe 60 den Weg freigibt, und sie versperrt den Zugang zum Kanalabschnitt 59 des Luftkanals 8. Die Luft kann demzufolge den Kanalabschnitt 58 des Luftkanals 8 passieren und aus der Kanalöffnung 12, die in den Raum 2 führt, austreten. In der Betriebsart "Ausatmen", steuern die Luftklappen 60 und 61 um, so wie dies aus der Figur 17 hervorgeht, die Luftfördereinrichtung 16, die insbesondere als Radialventilator 18 ausgebildet ist, ist weiterhin in Betrieb, wobei stets dieselbe Förderrichtung vorliegt, unabhängig von der jeweiligen Betriebsart. Gemäß Figur 17 wird beim "Ausatmen" Raumluft durch die Kanalöffnung 15 in den Kanalabschnitt 58 des Luftkanals 9 eingesaugt und gelangt in die Luftkammer 57, die dem Luftkanal 9 zugeordnet ist. Sie kann nicht in den Kanalabschnitt 59 des Luftkanals 9 eintreten, da die zugeordnete Luftklappe 61 dies verhindert. Nach Durchströmen der Luftverbindung 19 und der Luftfördereinrichtung 16 gelangt die Luft in den Kanalabschnitt 59 des Luftkanals 8. Sie kann nicht in den Kanalabschnitt 58 des Luftkanals 8 gelangen, da dies die Stellung der Luftklappe 60 verhindert. Demzufolge tritt die Luft aus der Kanalöffnung 13 in den Außenbereich 7 aus. Durch ein entsprechendes wechselweise erfolgendes Umsteuern der Verschlusseinrichtung 23 lässt sich eine gewünschte Zu- und Abluftsteuerung oder -regelung erzielen.

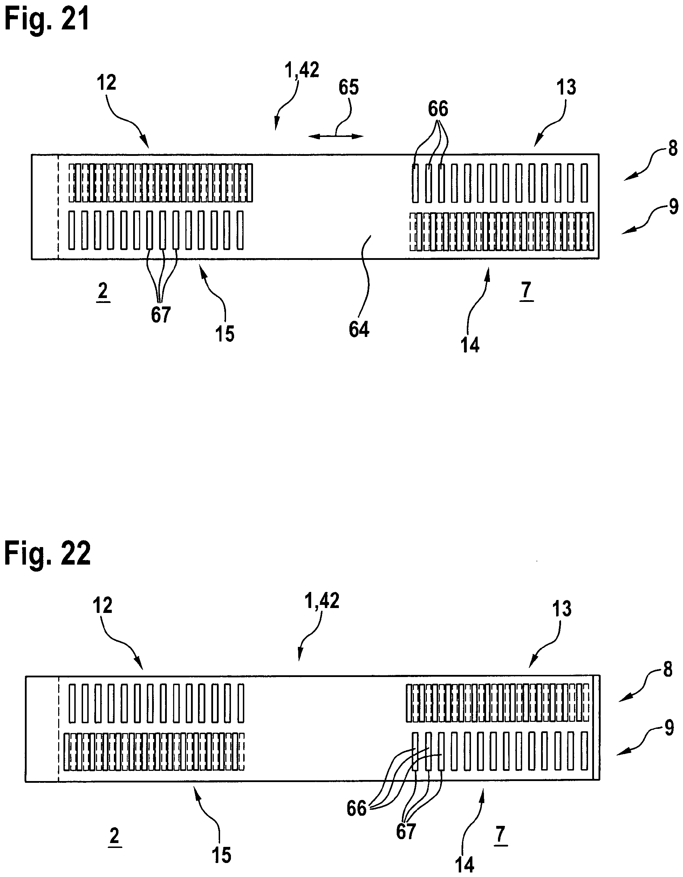

Die Figuren 21 und 22 zeigen ein weiteres Ausführungsbeispiel eines lufttechnischen Geräts 1, das sich von dem Ausführungsbeispiel der Figuren 1 bis 3 nur im Hinblick auf die Verschlusseinrichtung 23 unterscheidet, die nicht mittels Klappen realisiert ist, sondern mittels eines Linearschiebers 64, der mit sämtlichen Kanalöffnungen 12 bis 14 zusammenarbeitet und mittels einer nicht dargestellten Antriebsvorrichtung gemäß Doppelpfeil 65 hin- und herbewegt werden kann. Die Kanalöffnungen 12 bis 15 sind nicht als jeweils eine Öffnung, sondern jeweils als mehrere parallel zueinander liegende Öffnungsschlitze 66 ausgebildet. In entsprechender Weise weist der Linearschieber 64 Öffnungsschlitze 67 auf, die in der einen Schieberstellung gemäß Figur 21 und 22 mit den Öffnungsschlitzen 66 der Kanalöffnungen 12 bis 15 in Fluchtung oder in Nichtfluchtung und in der anderen Stellung des Linearschiebers 64 in Nichtfluchtung beziehungsweise Fluchtung gebracht werden können, mit der Folge, dass in der Stellung des Linearschiebers 64 gemäß Figur 21 die Kanalöffnung 12 geschlossen und die Kanalöffnung 13 geöffnet sowie die Kanalöffnung 14 verschlossen und die Kanalöffnung 15 geöffnet ist. In der Stellung des Linearschiebers 64 der Figur 22 ist die Kanalöffnung 12 geöffnet, die Kanalöffnung 13 geschlossen, die Kanalöffnung 14 geöffnet und die Kanalöffnung 15 verschlossen. Aus alledem wird deutlich, dass durch ein entsprechendes Hin- und Herschieben gemäß Doppelpfeil 65 die Verschlusseinrichtung 23 dieselbe Funktion übernimmt, wie die Luftklappen beim Ausführungsbeispiel der Figuren 1 bis 3, sodass ein entsprechender Betrieb mit einem Ausatmungs- und einem Einatmungseffekt wechselseitig erfolgen kann.

Selbstverständlich ist es auch denkbar, dass die Kanalöffnungen 12 bis 15 auf andere Art und Weise geöffnet und verschlossen werden, beispielsweise durch eine entsprechende Drehschieberausbildung, auf die hier nicht näher eingegangen werden soll, da mit dieser Information der Durchschnittsfachmann in der Lage ist, eine entsprechende Einrichtung zu realisieren.

Beim Ausführungsbeispiel der Figuren 21 und 22 ist die Verschlusseinrichtung 23 insbesondere als verschiebbare Lochblechmatrizenvorrichtung ausgebildet, die eingliedrig gestaltet ist, es sind jedoch auch separate, mehrgliedrige Lochblechmatrizenvorrichtungen denkbar. Ferner kann die Anordnung auch derart getroffen sein, dass eine rotierende Gehäusekontur um die Luftfördereinrichtung 16, insbesondere den Radialventilator 18, herum vorgesehen ist, die entsprechende Luftwege öffnet und schließt, um das "Einatmen" und das "Ausatmen" zu bewirken.

Bei dem vorstehend erwähnten Ausführungsbeispiel mit Wärmerückgewinnungsmodul 44 können zyklische Be- und Entlüftungsvorgänge entsprechende Lade-/Entladevorgänge der Wärmerückgewinnungseinrichtung des Wärmerückgewinnungsmoduls 44 bewirken. Mittels der Frequenz der zyklischen Vorgänge wird die Rückwärmezahl der Einrichtung gesteuert beziehungsweise geregelt.

Beim Ausführungsbeispiel mit Fassadenöffnungsmodul 50 kann insbesondere vorgesehen sein, dass dieses einen Luftweg beim "Ausatmen" zum Ausblasen eines Freistrahls aufweist und ein weiterer Luftströmungsweg, der sich von dem Ausatmungsluftweg unterscheidet, also getrennt ist, für das "Einatmen" verwendet wird, also eine Trennung der Luftwege vorliegt, um einen Kurzschluss an der Fassade des Gebäudes oder dergleichen zu vermeiden. Dies kann einen positiven Effekt auf die mittlere Ansaugtemperatur im Sommer haben, weil eine mögliche Grenzschichtbildung "weggeblasen" wird.

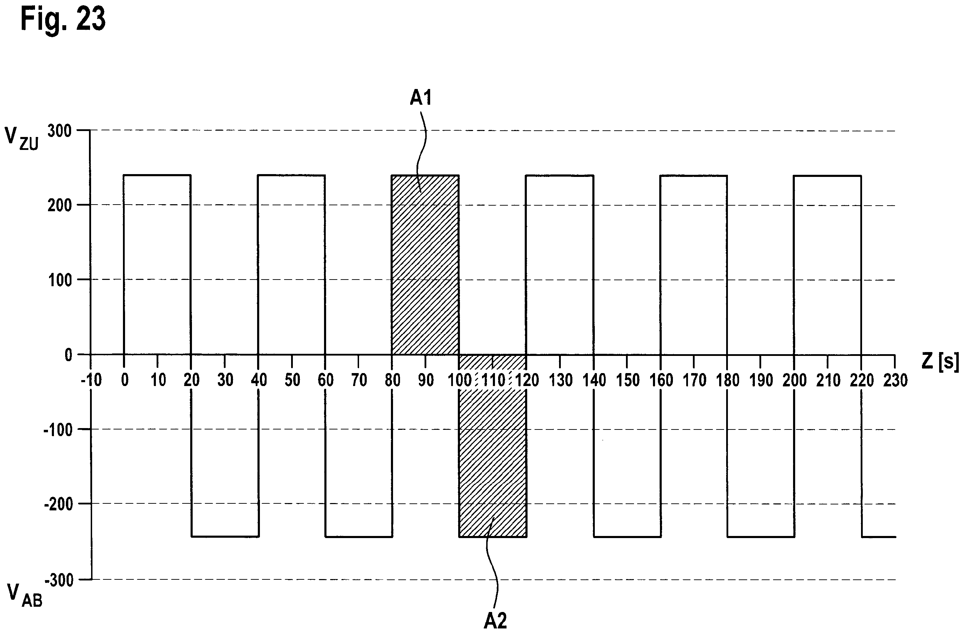

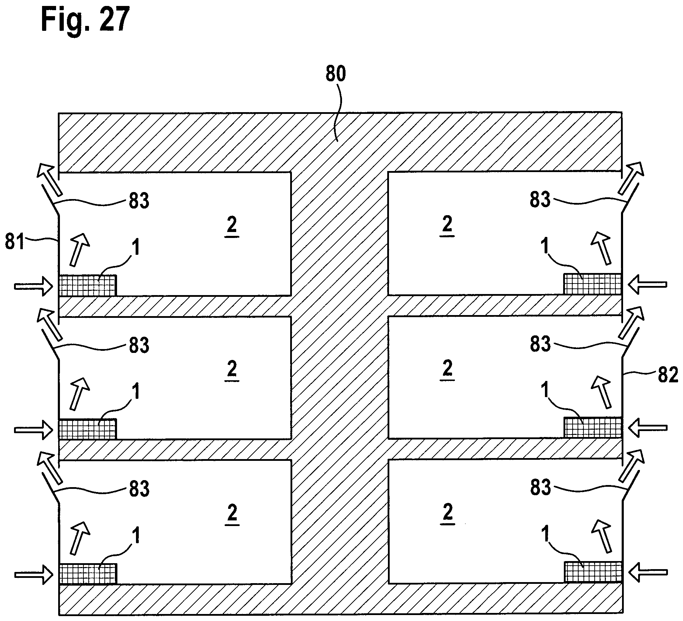

Die Figuren 23 bis 32 verdeutlichen insbesondere verschiedene Verfahren zum Be- und Entlüften von mindestens einem Raum eines Gebäudes oder dergleichen, vorzugsweise unter Verwendung von mindestens einem lufttechnischen Gerät 1, so wie es im Zuge dieser Anmeldung beschrieben ist. Die Pfeile in den Figuren 27 bis 31 verdeutlichen Luftvolumenströme.

Die Figur 23 zeigt beispielhaft einen Betrieb eines lufttechnischen Geräts 1 bei Windstille mit einer Zuluftförderung, insbesondere Außenluftförderung von 120 m³/h und einer Zykluszeit von 40 Sekunden. Auf der Ordinate sind positive Werte des Zu-Volumenstroms in m³/h und negative Werte des Ab-Volumenstroms, ebenfalls in m³/h, abgetragen und auf der Abszisse die Zeit Z in Sekunden [s]. Ein Zyklus betrifft das Durchlaufen der ersten Betriebsart und der zweiten Betriebsart, also das "Ausatmen" und das "Einatmen", nämlich einmal "einatmen" und einmal "ausatmen". Selbstverständlich sind die bei diesem Ausführungsbeispiel und auch bei den folgenden Ausführungsbeispielen gewählten Zahlenwerte nur beispielhaft zu sehen, sie können auch andere Werte aufweisen, ohne das jeweils erläuterte Prinzip zu verlassen. Wird der Zyklus von 40 Sekunden beim Ausführungsbeispiel der Figur 23 durchlaufen, so wird beim "Einatmen" ein Luftvolumen, insbesondere ein Außenluftvolumen, der Größe A1 gefördert. Dies ist die Fläche unter der dargestellten Kurve. Beim Ausatmen wird ein Luftvolumen der Fläche A2 gefördert. Es ist erkennbar, dass A1 = A2 ist, dass also das geförderte Luftvolumen beim "Einatmen" ebenso groß ist wie beim "Ausatmen". Der Zuluftvolumenstrom V_{ZU} beträgt beim Ausführungsbeispiel der Figur 23 240 m³/h und der Abluftvolumenstrom V_{AB} beträgt ebenfalls 240 m³/h.

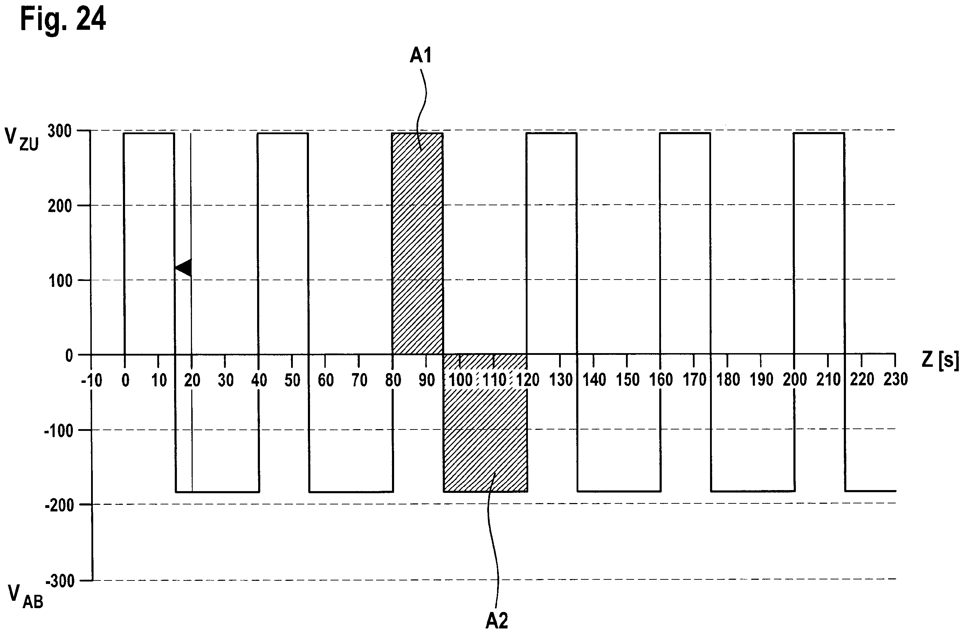

Die Figur 24 zeigt dieselbe Situation wie in der Figur 23, nur mit einem Überdruck der Luft aufgrund einer Windlast, beispielsweise an der Fassade des Gebäudes, mit der Folge, dass beim "Einatmen" aufgrund des Windüberdrucks ein größerer Zuluftvolumenstrom, nämlich beispielsweise von V_{ZU} = 240 + 50 m³/h gefördert wird. Um nun wiederum beim "Ausatmen" ein gegenüber dem "Einatmen" gleichgroßes Luftvolumen aus dem Raum wieder herauszufördern, erfolgt mittels der erwähnten Steuer- und/oder Regeleinrichtung eine Zeitsteuerung der Verschlusseinrichtung 23, vorzugsweise der Schließorgane 24, 25, insbesondere der Klappenblätter 28 bis 31, derart, dass wiederum gilt A1 = A2. Da sich der Zuluftvolumenstrom in der Figur 24 aufgrund des Windüberdrucks gegenüber der in der Figur 23 dargestellten Windstille vergrößert hat, nämlich hier um 50 m³/h, hat sich auch der Abluftvolumenstrom verändert, da gegen den Windüberdruck die Luft "ausgeatmet" werden muss. Der Abluftvolumenstrom beträgt daher in der Figur 24 V_{AB} = 240 - 50 m³/h. Die erwähnte Zeitsteuerung beziehungsweise Zeitregelung nimmt nun für die Bedingung A1 = A2 eine Phasenverschiebung von -4,2 Sekunden vor, was in der Figur 24 durch ein mit Pfeil versehenen Strich angedeutet ist. Demzufolge ist die Fläche A1 in der Zeit kürzer und in der Amplitude größer und die Fläche A2 in der Amplitude kleiner, dafür jedoch in der Zeitspanne entsprechend größer, sodass die Beziehung A1 = A2 erfüllt ist. Diese Wirkung wird einzig und allein durch die Zeitsteuerung beziehungsweise die Zeitregelung der Steuer- und/oder Regeleinrichtung realisiert.

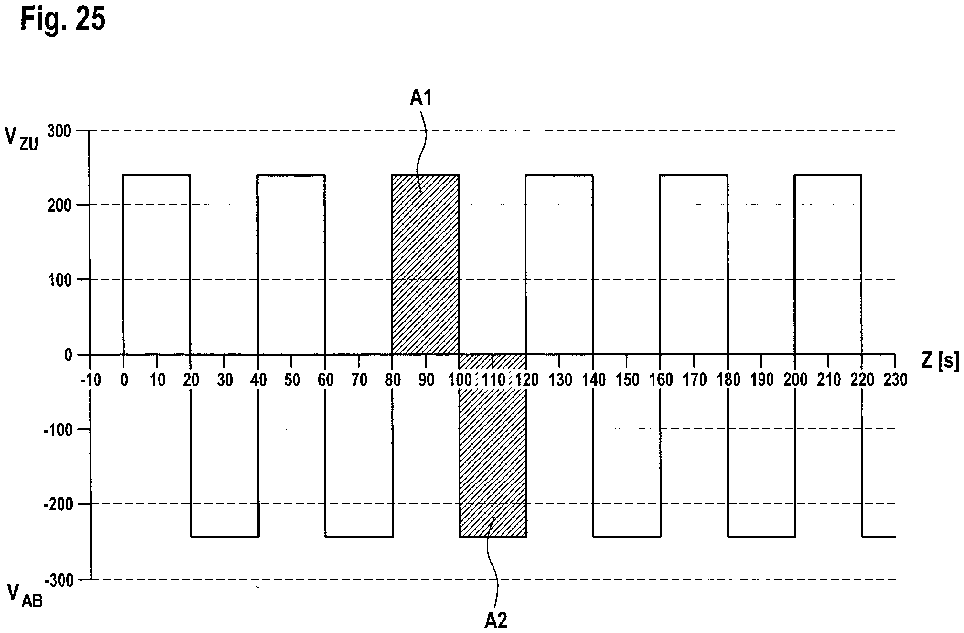

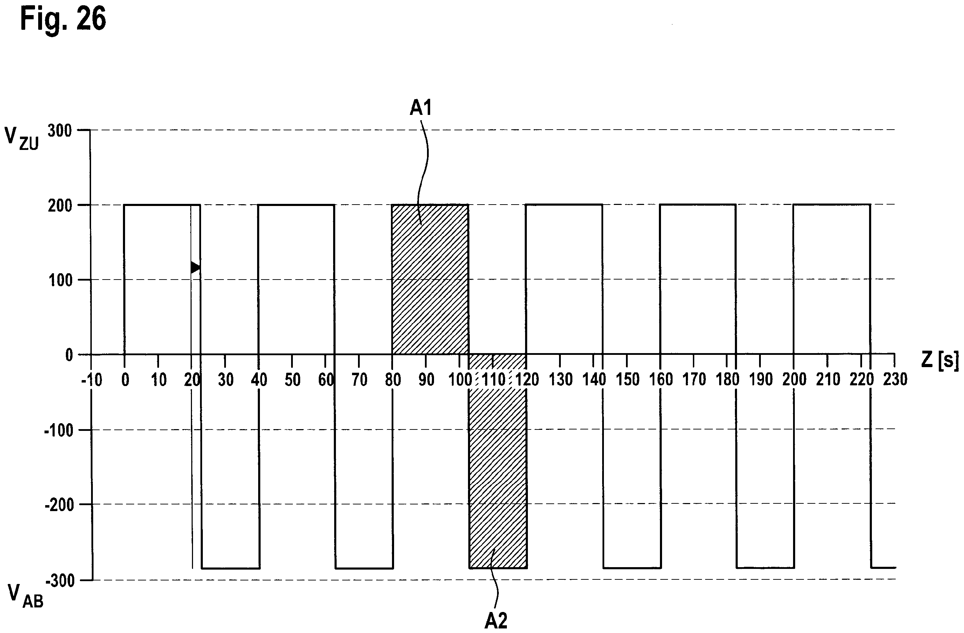

Die Figuren 25 und 26 zeigen die Situation ebenfalls bei einer Winddruckregelung, ebenso wie dies bei den Figuren 23 und 24 der Fall ist, jedoch liegt nunmehr auf der Fassade kein Windüberdruck, sondern ein Windunterdruck vor, sodass gegen diesen Unterdruck "eingeatmet" werden muss. Die Figur 25 entspricht der Figur 23, sodass auf die Ausführungen der Figur 23 verwiesen wird. Bei der Figur 26 liegen aufgrund des Windunterdrucks entsprechend umgekehrte Verhältnisse wie bei der Figur 24 vor, das heißt, es erfolgt eine positive Phasenverschiebung. Beim dargestellten Ausführungsbeispiel der Figur 26 beträgt der Zuluftvolumenstrom V_{ZU} 240 - 40 m³/h und der Abluftvolumenstrom V_{AB} 240 + 40 m³/h, mit der Folge, dass für die Erzielung der Bedingung A1 = A2 eine Phasenverschiebung von + 3,3 Sekunden erfolgen muss. Dies wird durch die entsprechende Zeitsteuerung beziehungsweise Zeitregelung der Klappenblätter 28 bis 31 der Luftklappen von der Steuer- und/oder Regeleinrichtung realisiert. Zu den Ausführungen betreffend die Figuren 23 bis 26 ist noch zu ergänzen, dass die Luftfördereinrichtung 16, also insbesondere der Ventilator 17, mit konstanter Drehzahl betrieben wird, wobei die Drehzahl jedoch aufgrund der Lastunterschiede entsprechend leicht schwanken wird.

In den Figuren 27 bis 29 ist schematisch ein Gebäude 80 dargestellt, das mehrere Räume 2 aufweist. Die Räume 2 grenzen jeweils an eine Fassade 81 beziehungsweise 82 des Gebäudes 80 an. Die Räume 2 besitzen jeweils mindestens ein Fenster 83 und in jedem Raum 2 befindet sich ein lufttechnisches Gerät 1. Die jeweiligen lufttechnischen Geräte 1 werden nur in der Betriebsart "Einatmen" durchgehend betrieben, sodass sie gegenüber dem Betrieb mit "Einatmen" und "Ausatmen", die doppelte Luftmenge fördern und akustisch gleichbleibend sind, das heißt die Betriebsgeräusche ändern sich gegenüber dem Betrieb mit "Ausatmen" nicht. Das "Ausatmen" erfolgt quasi außerhalb des lufttechnischen Geräts 1 dadurch, dass die Fenster 83 geöffnet sind. Da ein ununterbrochenes ständiges "Einatmen" erfolgt, erfolgt ebenfalls über das Fenster 83 ein ständiges, gleichmäßiges "Ausatmen". Diese Betriebsweise kann als hybride Lüftung bezeichnet werden, da einerseits die lufttechnische Einrichtung 1 und andererseits das Fenster 83 beteiligt ist. Es liegt über das lufttechnische Gerät 1 ein 100 %iger Zuluftbetrieb vor, beispielsweise kann diese Lüftungsart im Sommer verwendet werden.

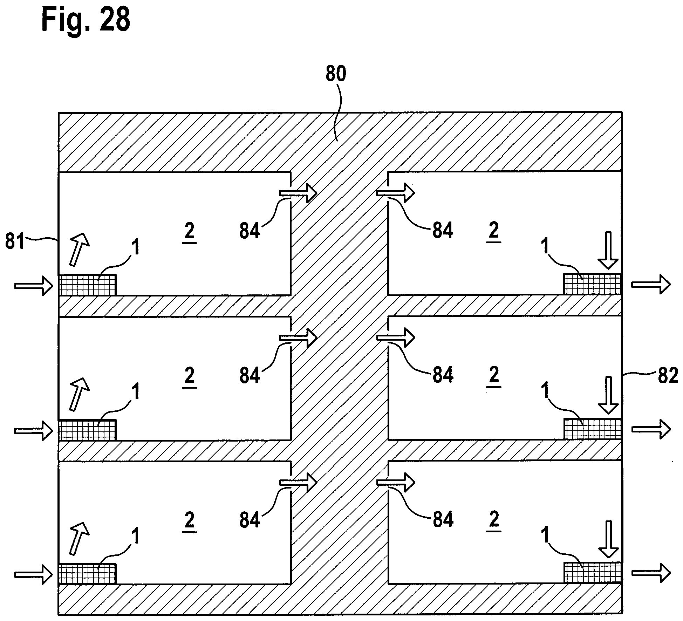

Die Figur 28 entspricht im Wesentlichen dem Aufbau der Figur 27, wobei jedoch die Räume 2 jeweils mit einer Überströmöffnung 84 versehen sind und entsprechend der Figur 27 auch beim dem Ausführungsbeispiel der Figur 28 jedes lufttechnische Gerät 1 im Dauerbetrieb des "Einatmens" ist, sofern es die auf der linken Seite des Gebäudes 80 in den Räumen 2 dargestellten lufttechnischen Geräte 1 betrifft. In den auf der rechten Seite des Gebäudes 80 liegenden Räume 2 arbeiten die lufttechnischen Geräte 1 permanent im Betrieb "Ausatmen", sodass hierdurch eine Querlüftung entsteht, wie die Pfeile verdeutlichen. Von einem linksseitig gelegenen Raum erfolgt eine Luftströmung über die zugeordneten Überströmöffnungen 84 zum auf gleicher Höhe liegenden rechtsseitig gelegenen Raum 2, das heißt, die Luft wird von der Fassade 81 durch die beiden Räume 2 geführt und tritt an der Fassade 82 dann wieder aus. Diese Betriebsführung kann zum Beispiel als Nachtlüftung ohne ein geöffnetes Fenster, insbesondere in einer Sommernacht, durchgeführt werden. Die Überströmöffnungen 84 können auch als Überströmkanäle 84 bezeichnet werden.

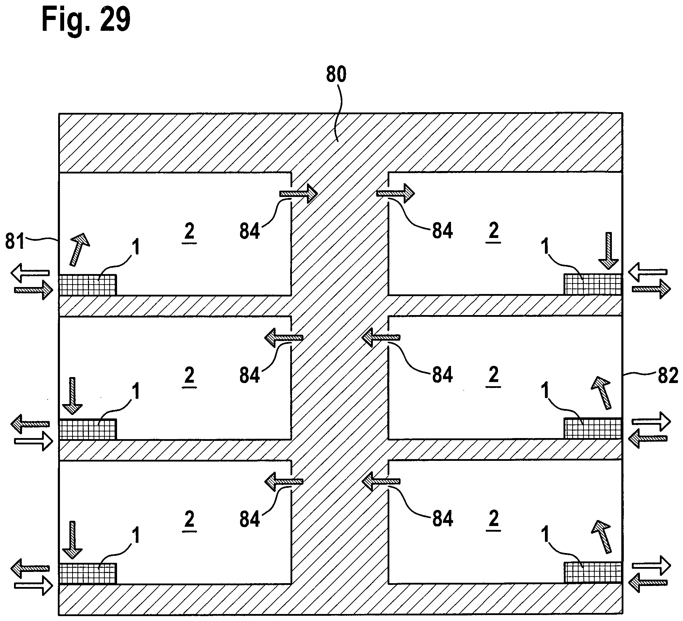

Beim Ausführungsbeispiel der Figur 29 liegt wiederum die gleiche Gebäudekonstellation, so wie bei den Ausführungsbeispielen der Figuren 27 und 28 vor. Die lufttechnischen Geräte 1 arbeiten im Normalbetrieb, das heißt sie wechseln in ihrer ersten und zweiten Betriebsart laufend ab, sodass ein ständiges "Einatmen" und "Ausatmen" pro Raum 2 erfolgt. Gleichwohl sind die Räume 2 über Überströmöffnungen 84 miteinander verbunden. Im Ausführungsbeispiel sind es jeweils auf gleicher Höhe liegende Räume 2, es kann jedoch auch nach anderen Ausführungsbeispielen eine andersartige Überströmungsmöglichkeit geschaffen sein, sodass beispielsweise alle Räume 2 kommunizierend lufttechnisch miteinander in Verbindung stehen. Die Folge ist, dass jedes lufttechnische Gerät 1 seinen Takt "atmet", durch die Überströmöffnungen 84 jedoch das ganze Gebäude 80 lufttechnisch miteinander "kommuniziert" oder Bereiche des Gebäudes 80 miteinander lufttechnisch kommunizieren, sodass die Luft entsprechend verteilt wird und quasi auch eine Innenzonenbelüftung im Gebäude 80 vorgenommen wird.

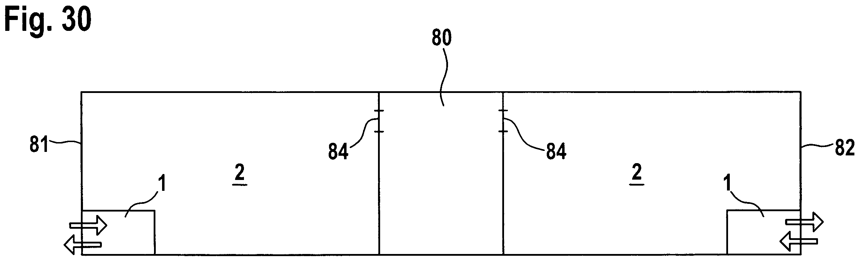

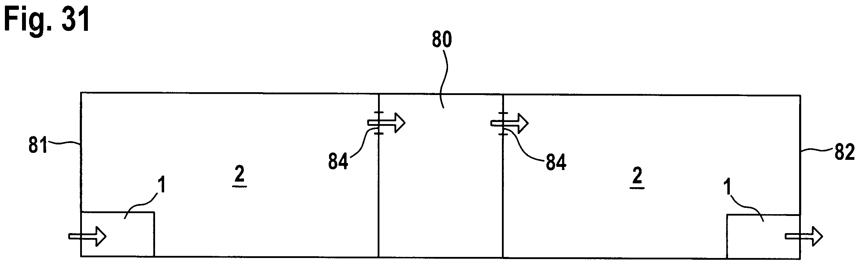

Die Figur 30 zeigt beispielsweise zwei Räume 2 eines Gebäudes 80, in dem sich jeweils ein lufttechnisches Gerät 1 befindet. Es wird davon ausgegangen, dass sich die beiden lufttechnischen Geräte 1 im Normalbetrieb befinden, also jeweils in entsprechendem Takt "einatmen" und "ausatmen". Hierbei soll eine Winddruckregelung vorhanden sein, so wie sie im Hinblick auf die Figuren 23 bis 26 beschrieben wurde. Wird nun ein vorgegebener Wert eines Windüberdrucks überschritten und/oder ein vorgegebener Wert eines Windunterdrucks unterschritten (mindestens ein Sensor sensiert dies), so geht der aus der Figur 30 ersichtliche Normalbetrieb mit Winddruckregelung in einen sogenannten Querlüftungsbetrieb mit Winddruckregelung über, der in der Figur 31 dargestellt ist. Das heißt, die durch Überströmöffnungen 84 eröffnete Möglichkeit des Überströmens von Luft von dem einen Raum 2 in den anderen Raum 2 wird genutzt zur Querlüftung des Gebäudes 80. Liegt auf der Seite der Fassade 81 ein Windüberdruck und/oder auf der Seite der Fassade 82 ein Windunterdruck vor, so strömt die Luft entsprechend der aus der Figur 31 hervorgehenden Pfeile (von Luv nach Lee), tritt also in den linken Raum mittels des lufttechnischen Geräts 1 ein, wobei dieses lufttechnische Gerät durch die Umschaltung vom Normalbetrieb in den Querlüftungsbetrieb permanent "einatmet", verlässt den Raum durch die Überströmöffnung 84 und tritt in die Überströmöffnung 84 des rechtsseitig liegenden Raums 2 ein und wird von der ebenfalls umgeschalteten lufttechnischen Einrichtung 1 dieses Raumes 2 permanent "ausgeatmet" und verlässt daher den Raum 2 im Bereich der Fassade 82.

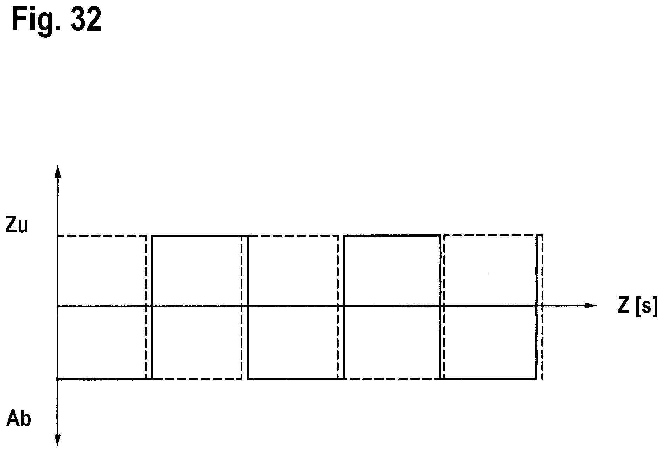

Die Figur 32 verdeutlicht den Betrieb von mindestens zwei lufttechnischen Geräten 1, die sich in ein und demselben Raum 2 befinden. Der Takt der einen lufttechnischen Einrichtung 1 ist mit durchgezogener Linie und der Takt des anderen raumlufttechnischen Gerätes 1 ist mittels gestrichelter Linie dargestellt. Die Linien liegen aufeinander, sind jedoch zur Verdeutlichung leicht versetzt nebeneinander dargestellt. Es wird ersichtlich, dass sich das eine Gerät 1 in der ersten Betriebsart befindet, während gleichzeitig das andere Gerät 1 die zweite Betriebsart aufweist und dass bei einem Wechsel des erstgenannten Geräts 1 von der ersten Betriebsart in die zweite Betriebsart das zweite Gerät 1 von der zweiten Betriebsart in die erste Betriebsart wechselt und so weiter. Das bedeutet, wenn das eine lufttechnische Gerät 1 "einatmet", "atmet" das andere lufttechnische Gerät 1 aus. Dementsprechend kann auch bei einer größeren Anzahl von lufttechnischen Geräten 1 vorgegangen werden, die sich in ein und demselben Raum 2 befinden.

Nachstehend sollen wesentliche Elemente der Erfindung zusammengefasst dargestellt werden. Die jeweiligen Klappenblätter 28 bis 31 der Verschlusseinrichtung 23 werden zeitgesteuert und/oder zeitgeregelt betrieben. Der Klappenwinkel zwischen vollständig offen und vollständig zu beträgt zwischen 0° und 90°, insbesondere zwischen 0° und 68°. Zwischenstellungen der Klappen sind in Abhängigkeit des jeweiligen Ausführungsbeispiels nicht erwünscht. Ist die Zuluftklappe offen, so ist die Abluftklappe zu und umgekehrt. Die Luftfördereinrichtung 16, die insbesondere als ein einziger Ventilator 17 ausgebildet ist, und der die Abluft und die Zuluft zugeordnet ist, liefert mit einer konstanten Drehzahl bei gleichbleibender Drehrichtung einen festgelegten Volumenstrom. Die Abluft und die Zuluft werden nun über die jeweilige Zeit der Offenstellung und Geschlossenstellung der erwähnten Klappen gesteuert und/oder geregelt. Angestrebt ist, dass das angesaugte Frisch- beziehungsweise Außenluftvolumen dem angesaugten Raumluftvolumen entspricht. Zum Beispiel werden 240 m³/h Zuluft eingeatmet und 240 m³/h Abluft ausgeatmet. Das bedeutet, dass die Zuluftklappe beispielsweise ca. 20 Sekunden im offenen Zustand und die Abluftklappe ca. 20 Sekunden im geschlossenen Zustand beharrt. Anschließend wird die Zuluftklappe geschlossen und die Abluftklappe ca. 20 Sekunden nach dem Öffnen im offenen Zustand belassen. Das Schließen und Öffnen wird in der Zeit zwischen 1 Sekunde und 5 Sekunden, insbesondere 3 Sekunden, durchgeführt. Da die Klappen immer schnell auf- und zugehen, spielt diese Verstellbewegung für die Betrachtung nur eine untergeordnete Rolle. Wichtig ist die Zeit der Offenstellung der Klappe beziehungsweise der Klappen. Da der Ventilator 17 eine nahezu konstante Drehzahl aufweist, hängt das zu fördernde Luftvolumen vom Öffnungsquerschnitt der Klappe - dieser ist im offenen Zustand konstant - und von der Zeit, wie lange die Klappe geöffnet ist, ab. Die einzige Variable ist die Zeit, in der die Klappe geöffnet ist. Bei Winddruck - zum Beispiel Überdruck an der Fassade - wird die Zeit der Offenstellung der Zuluftklappe verkürzt und die Zeit der Offenstellung der Abluftklappe verlängert, um das gleiche Luftvolumen "einzuatmen" und anschließend "auszuatmen". Bei Windunterdruck ist dies umgekehrt. Zur Steuerung beziehungsweise Regelung der Zeit werden gegebenenfalls Sensoren beziehungsweise Parameter eingesetzt. Insbesondere sind Sensoren, die den Druck oder den Volumenstrom messen, vorgesehen. Ferner ist es zusätzlich oder alternativ auch vorstellbar, dass die Drehzahl des Ventilators als Parameter für die Öffnungszeit herangezogen wird. Je nach Druckunterschied dreht der konstant angestellte Ventilator etwas höher oder etwas niedriger,

Es können auch besondere Betriebszustände mittels der Erfindung realisiert werden. Bei Überschreiten des Winddrucks über einen bestimmten Wert, wechselt der Betrieb auf Querlüftung in Windrichtung, also von Luv nach Lee. Nun muss die Abluft nicht gegen den Winddruck nach außen befördert werden, sondern der Wind wird genutzt, insbesondere mitgenutzt, um die Luft quer durch das Gebäude zu fördern. Bei einem weiteren Ausführungsbeispiel können auch mehrere Geräte in einem Raum verbaut werden. Diese können so gesteuert oder geregelt werden, dass sie sich jeweils kompensieren, das heißt wenn das eine Gerät einatmet, atmet das andere Gerät aus und so weiter.

## Patentansprüche

1. Lufttechnisches Gerät (1) zur Be- und Entlüftung von mindestens einem Raum (2) eines Gebäudes (80) oder dergleichen, mit zwei Luftkanälen (8,9), die jeweils eingangsseitig sowie ausgangsseitig je eine Kanalöffnung (12,13,14,15) aufweisen und die jeweils zwischen den zugehörigen Kanalöffnungen (12,13,14,15) durch nur eine nur eine einzige Luftförderrichtung aufweisende Luftfördereinrichtung (16) strömungstechnisch miteinander verbunden sind, und mit einer Verschlusseinrichtung (23), die in einer ersten Betriebsart zur Ausbildung eines über die Luftfördereinrichtung (16) führenden ersten Luftwegs die eine Kanalöffnung (12,13,14,15) des einen, ersten Luftkanals (8,9) mit der einen Kanalöffnung (12,13,14,15) des anderen, zweiten Luftkanals (9,8) strömungstechnisch verbindet, und die in einer zweiten Betriebsart zur Ausbildung eines über die Luftfördereinrichtung (16) führenden zweiten Luftwegs die andere Kanalöffnung (12,13,14,15) des ersten Luftkanals (8,9) mit der anderen Kanalöffnung (12,13,14,15) des zweiten Luftkanals (9,8) strömungstechnisch verbindet, wobei die Verschlusseinrichtung (23) mehrere Schließorgane (24,25) aufweist, **dadurch gekennzeichnet, dass** sich die Schließorgane (24,25) an den in einer Ebene liegenden Kanalöffnungen (12,13,14,15) befinden.

2. Gerät nach Anspruch 1, **dadurch gekennzeichnet, dass** die erste Betriebsart und die zweite Betriebsart im fortlaufenden Wechsel eingenommen werden.

3. Gerät nach einem der vorhergehenden Ansprüche, **dadurch gekennzeichnet, dass** die Verschlusseinrichtung (23) Schließorgane (24,25) aufweist, die vorzugsweise von mindestens einer Luftklappe und/oder von mindestens einem Schieber gebildet sind.

4. Gerät nach einem der vorhergehenden Ansprüche, **dadurch gekennzeichnet, dass** die Luftfördereinrichtung (16) eine kontinuierlich arbeitende Luftfördereinrichtung (16), insbesondere ein durchgehend laufender Ventilator (17), insbesondere Radialventilator (18), ist.

5. Gerät nach einem der vorhergehenden Ansprüche, **gekennzeichnet durch** eine beide Luftkanäle (8,9) strömungstechnisch verbindende Luftverbindung (19), in der sich die Luftfördereinrichtung (16) befindet oder die von der Luftfördereinrichtung (16) ausgebildet oder mit ausgebildet ist.

6. Gerät nach einem der vorhergehenden Ansprüche, **dadurch gekennzeichnet, dass** die Verschlusseinrichtung (23) mehrere Schließorgane (24,25) aufweist, die sich in den Luftkanälen (8,9) und/oder an den Kanalöffnungen (12,13,14,15) befinden.

7. Gerät nach einem der vorhergehenden Ansprüche, **dadurch gekennzeichnet, dass** der Luftverbindung (19) die Verschlusseinrichtung (23) zugeordnet ist.

8. Gerät nach einem der vorhergehenden Ansprüche, **dadurch gekennzeichnet, dass** jeder der Luftkanäle (8,9) in zwei Kanalabschnitte (58,59) strömungstechnisch unterteilt ist.

9. Gerät nach einem der vorhergehenden Ansprüche, **dadurch gekennzeichnet, dass** jeder Kanalabschnitt (58,59) mit der Luftverbindung (19) über ein Schließorgan (24,25) der Verschlusseinrichtung (23) strömungstechnisch verbunden ist.

10. Gerät nach einem der vorhergehenden Ansprüche, **dadurch gekennzeichnet, dass** zumindest einige der Schließorgane (24,25) jedes Luftkanals (8,9) als gemeinsames Verschlussorgan ausgebildet sind.

11. Gerät nach einem der vorhergehenden Ansprüche, **dadurch gekennzeichnet, dass** die Luftfördereinrichtung (16) einen konstanten Luftvolumenstrom fördert, wobei insbesondere vorgesehen ist, dass der durchgehend laufende Ventilator (17) eine konstante Drehzahl aufweist.

12. Gerät nach einem der vorhergehenden Ansprüche, **dadurch gekennzeichnet, dass** die Verschlusseinrichtung (23) von einer Steuer- und/oder Regeleinrichtung gesteuert und/oder geregelt wird.

13. Gerät nach einem der vorhergehenden Ansprüche, **dadurch gekennzeichnet, dass** die Verschlusseinrichtung (23) von der Steuer- und/oder Regeleinrichtung zeitgesteuert und/oder zeitgeregelt wird, insbesondere die Offenzeit und die Geschlossenzeit der Schließorgane (24,25) der Verschlusseinrichtung (23) mittels der Steuer- und/oder Regeleinrichtung gesteuert und/oder geregelt werden, vorzugsweise derart, dass in der ersten und in der zweiten Betriebsart jeweils gleichgroße Luftvolumen gefördert werden.

14. Gerät nach einem der vorhergehenden Ansprüche, **dadurch gekennzeichnet, dass** zur Bestimmung der Offenzeit und der Geschlossenzeit der Schließorgane (24,25) mindestens ein Sensor vorhanden ist.

15. Gerät nach einem der vorhergehenden Ansprüche, **dadurch gekennzeichnet, dass** der mindestens eine Sensor ein Winddrucksensor, ein Volumenstromsensor für das von der Luftfördereinrichtung (16) geförderte Luftvolumen und/oder ein Drehzahlsensor für die Drehzahl des Ventilators (17) ist.

16. Verfahren zum Be- und Entlüften von mindestens einem Raum (2) eines Gebäudes (80) oder dergleichen, mittels mindestens eines lufttechnischen Geräts (1) nach einem oder mehreren der vorhergehenden Ansprüche.

17. Verfahren nach Anspruch 16, **dadurch gekennzeichnet, dass** mindestens ein lufttechnisches Gerät (1) verwendet wird, das zwei Luftkanäle (8,9) aufweist, die jeweils eingangsseitig sowie ausgangsseitig je eine Kanalöffnung (12,13,14,15) aufweisen und die jeweils zwischen den zugehörigen Kanalöffnungen (12,13,14,15) durch nur eine nur eine einzige Luftförderrichtung aufweisende Luftfördereinrichtung (16) strömungstechnisch miteinander verbunden werden, und mit einer Verschlusseinrichtung (23), die in einer ersten Betriebsart zur Ausbildung eines über die Luftfördereinrichtung (16) führenden ersten Luftwegs die eine Kanalöffnung (12,13,14,15) des einen, ersten Luftkanals (8,9) mit der einen Kanalöffnung (12,13,14,15) des anderen, zweiten Luftkanals (9,8) strömungstechnisch verbindet, und die in einer zweiten Betriebsart zur Ausbildung eines über die Luftfördereinrichtung (16) führenden zweiten Luftwegs die andere Kanalöffnung (12,13,14,15) des ersten Luftkanals (8,9) mit der anderen Kanalöffnung (12,13,14,15) des zweiten Luftkanals (9,8) strömungstechnisch verbindet.

18. Verfahren nach einem der vorhergehenden Ansprüche 16 bis 17, **dadurch gekennzeichnet, dass** die Verschlusseinrichtung (23) zeitgesteuert und/oder zeitgeregelt wird - insbesondere die jeweilige Offenzeit und die jeweilige Geschlossenzeit von Schließorganen (24) der Verschlusseinrichtung (23) derart gesteuert und/oder geregelt werden - dass in der ersten Betriebsart und in der zweiten Betriebsart jeweils ein gleichgroßes Luftvolumen von der Luftfördereinrichtung (16) gefördert wird.

19. Verfahren nach einem der vorhergehenden Ansprüche 16 bis 18, **dadurch gekennzeichnet, dass** für die genannte Zeitsteuerung und/oder genannte Zeitregelung der Verschlusseinrichtung (23), insbesondere der Schließorgane (24), eine Erfassung eines Windüber- und/oder -unterdrucks, eine Luftvolumenerfassung des von der Luftfördereinrichtung (16) geförderten Luftvolumens und/oder eine Erfassung der Drehzahl eines die Luftfördereinrichtung (16) bildenden Ventilators (17) als Maß oder jeweils als Maß für das von der Luftfördereinrichtung (16) geförderte Luftvolumen berücksichtigt wird.

## Claims

1. A ventilation unit (1) for ventilating and exhausting at least one room (2) of a building (80) or the like, comprising two air ducts (8, 9), which in each case have a duct opening (12, 13, 14, 15) each on the input side as well as on the output side, and which are each fluidically connected to one another between the corresponding duct openings (12, 13, 14, 15) by means of only one air conveying device (16) having only a single air conveying direction, and comprising a closure device (23), which, in a first mode of operation for forming a first air path leading over the air conveying device (16), fluidically connects the one duct opening (12, 13, 14, 15) of the one, first air duct (8, 9) to the one duct opening (12, 13, 14, 15) of the other, second air duct (9, 8), and which, in a second mode of operation for forming a second air path leading over the air conveying device (16), fluidically connects the other duct opening (12, 13, 14, 15) of the first air duct (8, 9) to the other duct opening (12, 13, 14, 15) of the second air duct (9, 8), wherein the closure device (23) has a plurality of closing members (24, 25), **characterised in that** the closing members (24, 25) are located at the duct openings (12, 13, 14, 15), which lie in one plane.

2. The unit according to claim 1, **characterised in that** the first mode of operation and the second mode of operation are assumed in continuous alternation.

3. The unit according to any one of the preceding claims, **characterised in that** the closure device (23) has closing members (24, 25), which are preferably formed by at least one air flap and/or by at least one damper.

4. The unit according to any one of the preceding claims, **characterised in that** the air conveying device (16) is a continuously operating air conveying device (16), in particular a continuously running fan (17), in particular radial fan (18).

5. The unit according to any one of the preceding claims, **characterised by** an air connection (19), which fluidically connects both air ducts (8, 9) and in which the air conveying device (16) is located or which is formed by or also formed by the air conveying device (16).

6. The unit according to any one of the preceding claims, **characterised in that** the closure device (23) has a plurality of closing members (24, 25), which are located in the air ducts (8, 9) and/or at the duct openings (12, 13, 14, 15).

7. The unit according to any one of the preceding claims, **characterised in that** the closure device (23) is assigned to the air connection (19).

8. The unit according to any one of the preceding claims, **characterised in that** each of the air ducts (8, 9) is fluidically divided into two duct sections (58, 59).

9. The unit according to any one of the preceding claims, **characterised in that** each duct section (58, 59) is fluidically connected to the air connection (19) via a closing member (24, 25) of the closure device (23).

10. The unit according to any one of the preceding claims, **characterised in that** at least some of the closing members (24, 25) of each air duct (8, 9) are formed as joint closure member.

11. The unit according to any one of the preceding claims, **characterised in that** the air conveying device (16) conveys a constant air volume flow, wherein it is in particular provided that the continuously running fan (17) has a constant speed.

12. The unit according to any one of the preceding claims, **characterised in that** the closure device (23) is controlled and/or regulated by a control and/or regulating device.

13. The unit according to any one of the preceding claims, **characterised in that** the closure device (23) is time-controlled and/or time-regulated by the control and/or regulating device, in particular that the open time and the closed time of the closing members (24, 25) of the closure device (23) are controlled and/or regulated by means of the control and/or regulating device, preferably such that identical air volume flows are in each case conveyed in the first and in the second mode of operation.

14. The unit according to any one of the preceding claims, **characterised in that** at least one sensor is present to determine the open time and the closed time of the closing members (24, 25).

15. The unit according to any one of the preceding claims, **characterised in that** the at least one sensor is a wind pressure sensor, a volume flow sensor for the air volume conveyed by the air conveying device (16) and/or a speed sensor for the speed of the fan (17).

16. A method for ventilating and exhausting at least one room (2) of a building (80) or the like by means of at least one ventilation unit (1) according to any one or a plurality of the preceding claims.

17. The method according to claim 16, **characterised in that** at least one ventilation unit (1) is used, which has two air ducts (8, 9), which in each case have a duct opening (12, 13, 14, 15) each on the input side as well as on the output side, and which are each fluidically connected to one another between the corresponding duct openings (12, 13, 14, 15) by means of only one air conveying device (16) having only a single air conveying direction, and comprising a closure device (23), which, in a first mode of operation for forming a first air path leading over the air conveying device (16), fluidically connects the one duct opening (12, 13, 14, 15) of the one, first air duct (8, 9) to the one duct opening (12, 13, 14, 15) of the other, second air duct (9, 8), and which, in a second mode of operation for forming a second air path leading over the air conveying device (16), fluidically connects the other duct opening (12, 13, 14, 15) of the first air duct (8, 9) to the other duct opening (12, 13, 14, 15) of the second air duct (9, 8).

18. The method according to any one of the preceding claims 16 to 17, **characterised in that** the closure device (23) is time-controlled and/or time-regulated - in particular that the respective open time and the respective closed time of closing members (24) of the closure device (23) are controlled and/or regulated such - that an identical air volume flow is in each case conveyed in the first mode of operation and in the second mode of operation.

19. The method according to any one of the preceding claims 16 to 18, **characterised in that** for the mentioned time control and/or mentioned time regulation of the closure device (23), in particular of the closing members (24), a detection of a positive wind pressure and/or negative wind pressure, an air volume detection of the air volume conveyed by the air conveying device (16) and/or a detection of the speed of a fan (17) forming the air conveying device (16) is considered as measure or in each case as measure for the air volume conveyed by the air conveying device (16).

## Revendications

1. Appareil relatif aux techniques d'aération (1) pour la ventilation et l'aération au moins d'une pièce (2) d'un bâtiment (80) ou d'un espace similaire, avec deux conduits d'air (8, 9) qui présentent respectivement côté entrée et côté sortie un orifice de conduit (12, 13, 14, 15) et qui sont reliés entre eux, sur le plan du flux, seulement par un dispositif de ventilation (16) présentant un seul sens de ventilation, entre les orifices de conduits (12, 13, 14, 15) correspondants, et avec un dispositif de fermeture (23) qui relie sur le plan du flux, dans un premier mode de service pour la formation d'une première voie d'aération passant au-dessus du dispositif de ventilation (16), l'orifice de conduit (12, 13, 14, 15) du premier conduit d'air (8, 9) à l'orifice de conduit (12, 13, 14, 15) du deuxième conduit d'air (9, 8) et qui relie sur le plan du flux, dans un deuxième mode de service pour la formation d'une deuxième voie d'aération passant au-dessus du dispositif de ventilation (16), l'autre orifice de conduit (12, 13, 14, 15) du premier conduit d'air (8, 9) à l'autre orifice de conduit (12, 13, 14, 15) du deuxième conduit d'air (9, 8), le dispositif de fermeture (23) présentant plusieurs organes de fermeture (24, 25), **caractérisé en ce que** les organes de fermeture (24, 25) se trouvent sur les orifices de conduits (12, 13, 14, 15) situés dans un même plan.

2. Appareil conformément à la revendication 1, **caractérisé en ce que** le premier mode de service et le deuxième mode de service sont adoptés en alternance continue.

3. Appareil conformément à l'une des revendications précédentes, **caractérisé en ce que** le dispositif de fermeture (23) présente des organes de fermeture (24, 25) qui sont formés de préférence au moins par un clapet d'aération et/ou au moins par une vanne.

4. Appareil conformément à l'une des revendications précédentes, **caractérisé en ce que** le dispositif de ventilation (16) est un dispositif de ventilation (16) à fonctionnement continu, en particulier un ventilateur (17) à fonctionnement permanent, en particulier un ventilateur radial (18).

5. Appareil conformément à l'une des revendications précédentes, **caractérisé en ce qu'**une liaison aérienne (19) dans laquelle se trouve le dispositif de ventilation (16) ou qui est formée ou conjointement formée par le dispositif de ventilation (16), relie les deux conduits d'air (8, 9) sur le plan du flux.

6. Appareil conformément à l'une des revendications précédentes, **caractérisé en ce que** le dispositif de fermeture (23) présente plusieurs organes de fermeture (24,25) qui se trouvent dans les conduits d'air (8, 9) et/ou sur les orifices des conduits (12, 13, 14, 15).

7. Appareil conformément à l'une des revendications précédentes, **caractérisé en ce que** le dispositif de fermeture (23) est affecté à la liaison aérienne (19).

8. Appareil conformément à l'une des revendications précédentes, **caractérisé en ce que** chacun des conduits d'air (8, 9) est divisé sur le plan du flux en deux sections de conduits (58, 59).

9. Appareil conformément à l'une des revendications précédentes, **caractérisé en ce que** chaque section de conduit (58, 59) est reliée sur le plan du flux à la liaison aérienne (19) par un organe de fermeture (24, 25) du dispositif de fermeture (23).

10. Appareil conformément à l'une des revendications précédentes, **caractérisé en ce qu'**au moins certains des organes de fermeture (24, 25) de chaque conduit d'air (8, 9) sont conçus comme organe de fermeture commun.

11. Appareil conformément à l'une des revendications précédentes, **caractérisé en ce que** le dispositif de ventilation (16) produit un débit volumique d'air constant, étant en particulier prévu que le ventilateur (17) à fonctionnement permanent présente une vitesse de rotation constante.

12. Appareil conformément à l'une des revendications précédentes, **caractérisé en ce que** le dispositif de fermeture (23) est contrôlé et/ou régulé par un dispositif de contrôle et/ou de régulation.

13. Appareil conformément à l'une des revendications précédentes, **caractérisé en ce que** le dispositif de fermeture (23) est synchronisé et/ou temporisé par le dispositif de contrôle et/ou de régulation, qu'en particulier le temps d'ouverture et le temps de fermeture des organes de fermeture (24, 25) du dispositif de fermeture (23) sont contrôlés et/ou régulés au moyen du dispositif de contrôle et/ou de régulation, de préférence de telle manière à ce que des volumes d'air identiques soient respectivement produits dans le premier et le deuxième mode de service.

14. Appareil conformément à l'une des revendications précédentes, **caractérisé en ce qu'**au moins une sonde est existante pour la détermination du temps d'ouverture et du temps de fermeture des organes de fermeture (24, 25).

15. Appareil conformément à l'une des revendications précédentes, **caractérisé en ce qu'**au moins la sonde est une sonde de pression du vent, un capteur de débit volumique pour le volume d'air produit par le dispositif de ventilation (16) et/ou un capteur de vitesse pour la vitesse du ventilateur (17).

16. Procédé pour la ventilation et l'aération au moins d'une pièce (2) d'un bâtiment (80) ou d'un espace similaire au moyen au moins d'un appareil relatif aux techniques d'aération (1) conformément à une ou plusieurs des revendications précédentes.

17. Procédé conformément à la revendication 16, **caractérisé en ce qu'**au moins un appareil relatif aux techniques d'aération (1) est utilisé, lequel présente deux conduits d'air (8, 9) qui présentent respectivement côté entrée et côté sortie un orifice de conduit (12, 13, 14, 15) et qui sont reliés entre eux, sur le plan du flux, seulement par un dispositif de ventilation (16) présentant un seul sens de ventilation, et avec un dispositif de fermeture (23) qui relie sur le plan du flux, dans un premier mode de service pour la formation d'une première voie d'aération passant au-dessus du dispositif de ventilation (16), l'orifice de conduit (12, 13, 14, 15) du premier conduit d'air (8, 9) à l'orifice de conduit (12, 13, 14, 15) du deuxième conduit d'air (9, 8) et qui relie, sur le plan du flux, dans un deuxième mode de service pour la formation d'une deuxième voie d'aération passant au-dessus du dispositif de ventilation (16), l'autre orifice de conduit (12, 13, 14, 15) du premier conduit d'air (8, 9) à l'autre orifice de conduit (12, 13, 14, 15) du deuxième conduit d'air (9, 8).

18. Procédé conformément à l'une des revendications précédentes 16 à 17, **caractérisé en ce que** le dispositif de fermeture (23) est commandé par le temps et/ou réglé par le temps, qu'en particulier le temps d'ouverture et le temps de fermeture d'organes de fermeture (24) du dispositif de fermeture (23) sont contrôlés et/ou régulés de telle manière à ce qu'un volume d'air identique soit respectivement produit par le dispositif de ventilation (16) dans le premier et le deuxième mode de service.

19. Procédé conformément à l'une des revendications précédentes 16 à 18, **caractérisé en ce que,** pour la contrôle du temps mentionnée et/ou la réglementation du temps mentionnée du dispositif de fermeture (23), en particulier des organes de fermeture (24), un enregistrement d'une surpression et/ou dépression du vent, un enregistrement du volume d'air produit par le dispositif de ventilation (16) et/ou un enregistrement de la vitesse d'un ventilateur (17) formant le dispositif de ventilation (16) est pris en considération comme mesure ou respectivement comme mesure pour le volume d'air produit par le dispositif de ventilation (16).
